(19) Europäisches Patentamt
European Patent Office
Office européen des brevets

(11) **EP 3 136 586 B1**

(12) **EUROPEAN PATENT SPECIFICATION**

(45) Date of publication and mention of the grant of the patent:
**14.10.2020 Bulletin 2020/42**

(51) Int Cl.:
*H02P 21/24* *(2016.01)*          *H02P 6/182* *(2016.01)*
*H02P 21/18* *(2016.01)*

(21) Application number: **16186565.4**

(22) Date of filing: **31.08.2016**

(54) **SENSORLESS MOTOR DRIVE VECTOR CONTROL WITH FEEDBACK COMPENSATION FOR FILTER CAPACITOR CURRENT**

SENSORLOSE MOTORANTRIEBSVEKTORSTEUERUNG MIT FEEDBACKKOMPENSATION FÜR FILTERKONDENSATORSTROM

COMMANDE VECTORIELLE SANS CAPTEUR POUR MOTEUR AVEC COMPENSATION DU COURANT DU CONDENSATEUR DU FILTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2015 US 201562212063 P**
**25.02.2016 US 201615053135**

(43) Date of publication of application:
**01.03.2017 Bulletin 2017/09**

(73) Proprietor: **Rockwell Automation Technologies, Inc.**
**Mayfield Heights, OH 44124 (US)**

(72) Inventors:
• **NONDAHL, Thomas**
**Greenfield, Wisconsin 53220 (US)**
• **ROYAK, Semyon**
**Orange Village, Ohio 44122 (US)**
• **LIU, Jingbo**
**Grafton, Wisconsin 53024 (US)**
• **DAI, Jingya**
**Burnaby, British Columbia V5A 2A7 (CA)**
• **AL-NABI, Ehsan**
**Cambridge, Ontario N3C 0B8 (CA)**
• **SCHMIDT, Peter B.**
**Franklin, Wisconsin 53132 (US)**

(74) Representative: **Grünecker Patent- und Rechtsanwälte**
**PartG mbB**
**Leopoldstraße 4**
**80802 München (DE)**

(56) References cited:
**EP-A1- 1 868 288          US-A1- 2009 153 083**
**US-A1- 2014 265 952     US-A1- 2015 123 579**

• **PARK J-D ET AL: "Design and control of high-speed solid-rotor synchronous reluctance drive with three-phase LC filter", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, IEEE, CONFERENCE RECORD OF THE 2005 IEEE INDUSTRY APPLICATIONS CONFERENCE FORTIETH IAS ANNUAL MEETING (IEEE CAT., vol. 1, 2 October 2005 (2005-10-02), pages 715-722, XP010842447, DOI: 10.1109/IAS.2005.1518386 ISBN: 978-0-7803-9208-3**
• **STEINKE J K ET AL: "Use of a LC filter to achieve a motor friendly performance of the PWM voltage source inverter", ELECTRIC MACHINES AND DRIVES CONFERENCE RECORD, 1997. IEEE INTERNATION AL MILWAUKEE, WI, USA 18-21 MAY 1997, NEW YORK, NY, USA, IEEE, US, 18 May 1997 (1997-05-18), pages TA2/4.1-TA2/4.3, XP010231763, ISBN: 978-0-7803-3946-0**

**Description**

The subject matter disclosed herein relates to power conversion, and more specifically to motor drive control with feedback compensation for filter capacitor currents.

US 2015/123579 A1 discloses power converters and methods for driving an AC load connected through an intervening filter circuit, in which at least one filter current or voltage signal or value is determined according to feedback signals or values representing an output parameter at an AC output of the power converter, and AC electrical output power is generated at the AC output based at least partially on the at least one filter current or voltage signal or value. A controller implements an inner current loop to control inverter output currents. A current reference component receives the d and q-axis current setpoint signals or values from the velocity PI controller, along with one or more signals or values representing the currents flowing in the filter capacitors of the filter circuit. The current reference component provides compensated current setpoint values to a summing junction based on the d and q-axis current setpoint values and the filter capacitor current values. The summing junction, in turn, provides at least one error signal (e.g., including d-axis and q-axis components) to a current PI controller component based on the difference between the compensated current setpoint values and the d-q current feedback values obtained from a stationary/synchronous reference frame converter component. The current PI control component provides a control output as one or more voltage reference values to a summing junction to provide an inner voltage control loop implemented by the controller.

US 2014/265952 A1 discloses that input-output linearization and extended state observer techniques are applied to a field oriented controller for permanent magnet synchronous motors. Operating parameters for the motor are determined based on at least one gain value and information from a current sensor regarding motor current. Current for the motor is sensed and transformed using a Clarke-Park transformation to obtain feedback values. An estimator takes available motor current and applied voltage values and outputs estimated rotor position and speed.

US 2009/153083 A1 discloses a motor control with both open loop and closed loop controllers. The open loop and closed loop controllers provide commutation signals back to gate drivers for an inverter, wherein the commutation signals utilize sinusoidal signals in open loop control, and utilize six step commutation in closed loop control. Voltage sensors supply voltage signals from each of the three-phases through to a speed and position estimator. The speed and position estimator provides a speed feedback signal to the open loop controller, and a position and a speed feedback signal to the closed loop controller.

It is therefore the object of the present invention to provide an improved power conversion system for controlling an inverter to regulate the rotational speed of a motor, a corresponding method and a corresponding computer readable medium.

This object is solved by the subject matter of the independent claims.

Preferred embodiments are defined by the dependent claims.

Various aspects of the present disclosure are now summarized to facilitate a basic understanding of the disclosure, wherein this summary is not an extensive overview of the disclosure, and is intended neither to identify certain elements of the disclosure, nor to delineate the scope thereof. Rather, the primary purpose of this summary is to present various concepts of the disclosure in a simplified form prior to the more detailed description that is presented hereinafter. The present disclosure provides power conversion systems and methods to drive a motor load. Disclosed examples include methods, computer readable mediums and motor drive power conversion systems for sensorless speed control of a motor driven by an inverter through an intervening filter. A controller in certain embodiments computes motor current feedback values for a current control cycle according to inverter output current values, capacitance values representing capacitances of filter capacitors of the filter, filter output voltage values representing output voltages of the filter, and a speed reference value of a previous control cycle. The controller computes a speed feedback value for the current control cycle according to the motor current feedback values and the filter output voltage values, and controls the inverter to regulate the rotational speed of the motor at least partially according to the speed feedback value using vector control.

FIG. 1 is a schematic diagram of a motor drive power conversion system with an inverter driving a motor load through an output filter.
FIG. 2 is a schematic diagram showing further details of an EMF-based observer implemented in an inverter controller in the system of FIG. 1.
FIG. 3 is a schematic diagram of a first converter controller embodiment.
FIG. 4 is a schematic diagram of a second converter controller embodiment.
FIG. 5 is a flow diagram illustrating a motor control method.
FIG. 6 is a schematic diagram showing filter currents.
FIG. 7 is a waveform diagram showing line-line filter output voltages.
FIG. 8 is a schematic diagram showing instantaneous capacitor current computation for delta-connected filter capacitors.
FIG. 9 is a schematic diagram showing instantaneous capacitor current computation for Y-connected filter capacitors.

FIG. 10 is a schematic diagram showing instantaneous motor current computation for delta-connected filter capacitors.

FIG. 11 is a schematic diagram showing instantaneous motor current computation for Y-connected filter capacitors.

## DETAILED DESCRIPTION

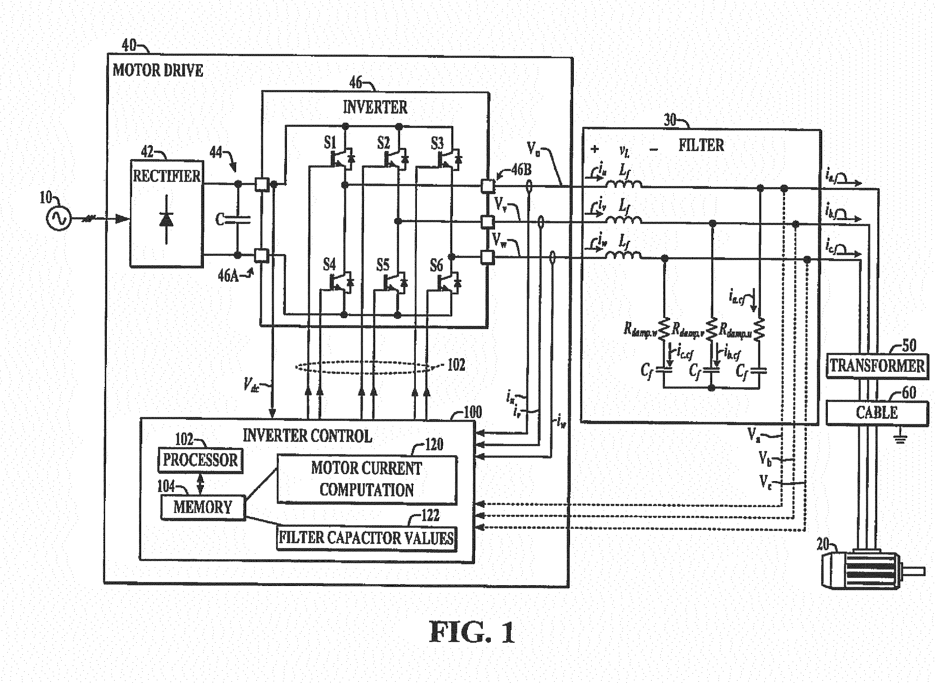

Referring now to the figures, several embodiments or implementations are hereinafter described in conjunction with the drawings, wherein like reference numerals are used to refer to like elements throughout. FIGs. 1-4 show a motor drive power conversion system 40, including an inverter 46 to drive an output load, such as a motor 20 through an intervening filter 30, referred to herein as an output filter or a sine wave filter, and a motor cable 60. In certain implementations, as shown in FIG. 1, a transformer 50 can be connected between the output filter 30 and the driven motor load 20. Power conversion systems typically include an inverter stage to generate and provide AC output power to a load, such as a single or multi-phase AC motor. Pulse width modulated (PWM) output inverters provide output currents and voltages that include a number of pulses. Accordingly, output filters, such as sine wave filters are sometimes employed between the inverter output and the driven load to reduce the high frequency content caused by pulse width modulation of the inverter switches.

Disclosed examples include methods, computer readable mediums 104 and motor drives power conversion systems 40 for sensorless speed control of a motor 20 driven by an inverter 46 through the intervening filter 30 in which sensorless vector control is used to regulate the motor speed. The drive 40 includes an inverter controller 100 with a processor 102 and a memory 104 which operate the switches S1-S6 of an inverter 46 to control the motor speed and regulate the motor current using a motor current computation component 120 and filter capacitor values 122 representing capacitance values of filters $C_f$ of the filter 30. The presence of the output filter 30 between the power conversion system 40 and the load 20 makes accurate control of the motor voltages and currents difficult, as the power delivered to the load 20 is different from that delivered to the input of the filter 30. The output inverter stage 46 may be controlled according to feedback signals measured at the inverter output terminals, but these feedback values generally do not represent the currents or voltages ultimately provided to the load 20. Feedback sensors can be provided at the load itself for direct measurement of the load parameters, but this increases system cost, and may not be possible in all applications.

The system 40 can be used in a variety of applications, particularly where providing position and/or speed sensors directly at a motor load 20 is difficult or impractical. In certain applications, a step-up transformer 50 is used to boost the motor drive output voltage, allowing use of a low-voltage drive to power a medium voltage induction motor 20, and/or to reduce $I^2R$ losses and facilitate use of a smaller diameter cable wire 60 for long cable runs between the motor drive 40 and the driven motor 20. Certain applications also employ output filters 30 between the motor drive inverter output and the transformer primary in order to suppress reflected wave voltage spikes associated with pulse width modulated (PWM) operation of variable frequency drives 40. Use of sensorless voltage-frequency control techniques, however, has previously been problematic, particularly where a transformer 50 and/or sine wave filter 30 is connected between the motor drive 40 and the motor load 20. Sensorless field-oriented-control (FOC) or other open loop speed control techniques have thus been found generally unsuitable for low-speed motor drive operation where output filters 30 and transformers 50 are used, such as in electric submersible pumps (ESPs), and these difficulties are particularly problematic in driving permanent magnet synchronous motors (PMSMs). Moreover, motors in sensorless speed control applications also suffer from oscillation in rotor velocity about the setpoint speed following load transitions or speed setpoint adjustments, particularly at low speeds. In certain situations, moreover, starting the driven motor from a stopped condition may be difficult due to unstable motor speed oscillations.

Presently disclosed embodiments provide power conversion systems 40 and inverter control methods and apparatus 100 to drive a motor load 20 through an intervening filter 30, which can also be used in combination with a transformer 50 and a potentially lengthy cables 60 coupled between the filter output and the driven motor load 20. FIG. 1 shows a motor drive power conversion system 40 with an inverter 46 and an inverter controller 100 configured to control current of a driven motor load 20 based on sensed or computed inverter output current signals or values $i_u$, $i_v$, $i_w$ representing output currents flowing at an AC output 46B of the inverter 46. The motor drive 40 receives single or multiphase AC input power from a power source 10 and converts this to a DC bus voltage using a rectifier 42 which provides a DC output voltage to a DC link circuit 44 having a capacitor C. The rectifier 42 can be a passive rectifier including one or more diode rectifier components, or may be an active front end (AFE) system with one or more rectifier switching devices (e.g., IGBTs, SiC transistors, IGCTs, etc.) and an associated rectifier controller (not shown) for converting input AC electrical power to provide the DC bus voltage in the link circuit 44. Other configurations are possible in which the drive 40 receives input DC power from an external source (not shown) to provide an input to the inverter 46, in which case the rectifier 42 may be omitted. The DC link circuit 44 may include a single capacitor C or multiple capacitors connected in any suitable series, parallel and/or series/parallel configuration to provide a DC link capacitance across inverter input terminals 46A. In addition, while the illustrated motor drive 40 is a voltage source converter configuration including one or more capacitive storage elements in the DC link circuit 44, the various concepts of the present disclosure may be implemented in association with current source converter architectures in which a DC link circuit 44 includes one or more inductive storage elements, such as one or more series-connected inductors situated between the source of DC power (e.g., rectifier 42 or external DC source) and the input 46A of the inverter 46. In other possible implementations, the motor drive 40 includes a direct DC input to receive input power from an external source (not shown), and in certain embodiments the rectifier 42 and DC link circuit 44 may both be omitted.

The DC input 46A of the inverter 46 includes first and second (e.g., plus and minus) terminals connected to the DC link circuit 44, as well as a plurality of switching devices S1-S6 coupled between the DC input 46A and the motor drive AC output 46B. In operation, the inverter switching devices S1-S6 are actuated by inverter switching control signals 102 provided by the controller 100 to convert DC electrical power received at the DC input 46A to provide AC electrical output power as inverter output voltages $V_u$, $V_v$, and $V_w$ and inverter output currents $i_u$, $i_v$, and $i_w$ at the AC output 46B. The filter circuit 30 receives the AC output from the inverter 46 of the motor drive 40. The motor drive 40 can be employed in connection with permanent magnet synchronous motors 20, or other types of AC motor loads 20 such as medium voltage induction motors 20, for example.

One or more feedback signals or values may be provided from the motor 20 itself, including a motor (e.g., rotor) position or angle signal Theta and a motor speed or velocity signal Spfbk, although not a strict requirement of all embodiments of the present disclosure. Moreover, the concepts of the present disclosure advantageously facilitate sensorless speed estimation and vector control-based speed regulation by the inverter controller 100, and thus direct feedback from the driven motor load 20 is not required in all implementations. The motor drive 40 in certain embodiments implements a motor speed and/or position and/or torque control scheme in which the inverter controller 100 selectively provides the switching control signals 102 in a closed and/or open-loop fashion according to one or more setpoint values such as a motor speed setpoint Spref, which can be a signal or value generated by the controller 100, or a fixed setpoint value, or such setpoint value can be received from an external system (not shown). In practice, the motor drive 40 may also receive a torque setpoint and/or a position (e.g., angle) setpoint, and such desired signals or values (setpoint(s)) may be received from a user interface and/or from an external device such as a distributed control system, etc. (not shown). As used herein, a signal can be an analog signal, such as a current or a voltage signal, or a signal can include digital values generated or consumed by the processor 102.

In the example of FIG. 1, the inverter 46 is connected to the load 20 through the intervening filter circuit 30. In one example, the filter 30 is an "L-C" configuration in which each of the power converter output lines is connected to the motor through a series-connected filter inductor $L_f$, with a corresponding filter capacitor $C_f$ connected between the corresponding motor line and a common connection point (a neutral of a Y-connected set of filter capacitors $C_f$ in the illustrated example). In the example of FIG. 1, moreover, the damping resistors $R_{damp.u}$, $R_{damp.v}$ and $R_{damp.w}$ are connected in series with the filter capacitors $C_f$. The damping resistors can be omitted in certain embodiments. Other implementations are possible in which the filter capacitors $C_f$ are connected in a "Delta" configuration. In the illustrated (Y-connected) configuration, the filter circuit neutral point can be optionally connected to a circuit ground or other common connection point associated with the motor drive 40, although not a strict requirement of the present disclosure. The disclosed apparatus and techniques can be employed in connection with other forms and types of filter circuits 30, including without limitation L-C-L circuits, etc.

The output of the filter circuit 30 provides phase currents $i_{a.f}$, $i_{b.f}$, and $i_{c.f}$ to control the motor load 20 (e.g., through the intervening transformer 50 and cable 60). However, the filter capacitor currents $i_{a,cf}$, $i_{b,cf}$ and $i_{c,cf}$ flow in the filter capacitors $C_f$ and non-zero filter voltages $v_L$ may develop across one or more of the filter inductors $L_f$. Simple closed-loop control based on measured inverter output current signals or values $i_u$, $i_v$, $i_w$ may thus result in less than optimal operation of the driven load 20. Directly measuring the filter output currents $i_{a.f}$, $i_{b.f}$, $i_{c.f}$ and/or motor currents $I_{m.a}$, $I_{m.b}$, $I_{m.c}$ and/or motor voltages, however, would require additional hardware and cabling, and may not be economically feasible or technically possible in certain applications. Nevertheless, for those cases where motor and/or filter output currents and/or drive output voltages such as $V_u$, $V_v$, $V_w$, and/or filter output voltages such as $V_a$, $V_b$, and $V_c$ in FIG. 1, are measured, those signals can be used to enhance or replace the inverter current and/or voltage signals in the control operation of the drive 40.

Certain embodiments of the inverter controller 100, however, advantageously provide sensorless vector control using a back-EMF based observer 211 to estimate the rotor position and/or speed of the driven motor load 20 using observer formulas and system parameters via computer executable instructions stored in a computer-readable electronic memory 104, which are executed by a processor 102 to implement vector control to regulate the motor speed. In addition, the controller 100 computes inverter-referred (i.e, as seen from the motor drive 40) motor current feedback values $i_{a.m}$, $i_{b.m}$, $i_{c.m}$ according to inverter output current values $i_u$, $i_v$, $i_w$, capacitance values representing capacitances of filter capacitors $C_f$ of the filter 30, filter output voltage values $V_{ab}$, $V_{bc}$, $V_{ca}$ representing output voltages of the filter 30, and either a speed feedback value Spfbk or a speed reference value Spref of a previous control cycle representing the electrical operating frequency of the inverter 46. The controller 100 computes 508 a speed feedback value Spfbk for the current control cycle according to the inverter-referred motor current values $i_{a.m}$, $i_{b.m}$, $i_{c.m}$ and the filter output voltage values $V_{ab}$, $V_{bc}$, $V_{cu}$, and controls 518 the inverter 46 to regulate the rotational speed of the motor 20 at least partially according to the speed feedback value Spfbk using vector control.

In various implementations, the controller 100 and the observer 211 thereof can perform the speed regulation and/or position/speed estimation functions according to one or more voltage and/or current values associated with the motor drive system 40, which can be measured values at the inverter output, at the output of the filter 30, at the output (e.g., secondary) of the transformer 50 or combinations thereof, in conjunction with observer system parameters that represent impedance parameters of the filter 30, the transformer 50, the motor cable 60 and the motor 20 referred to the primary side of the transformer 50 in order to facilitate reliable, stable speed control of the driven motor 20. For example, as seen in FIG. 1, the illustrated drive 40 may include one or more current sensors configured to measure, sense, or otherwise detect at least one inverter output feedback signal or value (e.g., output currents $i_u$, $i_v$, $i_w$) which represent the output current at the AC output 46B of the inverter 46. The inverter controller 100 thus accommodates the presence of the filter circuit 30 (e.g., and any optionally included transformer 50 and potentially lengthy motor cable 60) between the motor drive output 46B and the driven motor load 20, without requiring addition of external sensors to sense the actual rotor speed and/or position conditions at the motor load 20.

The controller 100 and the components thereof may be any suitable hardware, processor-executed software, processor-executed firmware, logic, or combinations thereof that are adapted, programmed, or otherwise configured to implement the functions illustrated and described herein. The controller 100 in certain embodiments may be implemented, in whole or in part, as software components executed using one or more processing elements, such as one or more processors 102, and may be implemented as a set of sub-components or objects including computer executable instructions stored in the non-transitory computer readable electronic memory 104 for operation using computer readable data executing on one or more hardware platforms such as one or more computers including one or more processors, data stores, memory, etc. The components of the controller 100 may be executed on the same computer processor or in distributed fashion in two or more processing components that are operatively coupled with one another to provide the functionality and operation described herein.

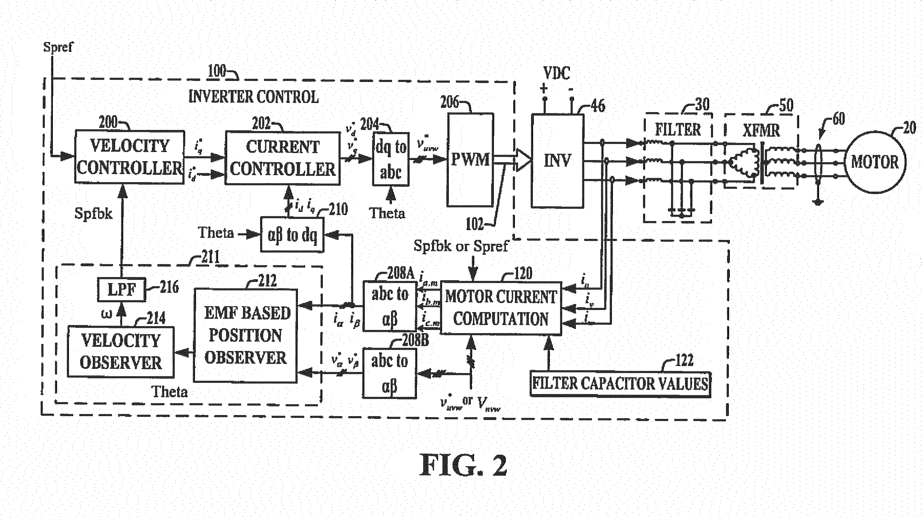

The controller 100 in one example is configured by execution in the processor 102 of instructions in the memory 104 to implement the control configurations illustrated in FIGs. 2-4. The inverter control component 100 in one example includes or implements a velocity controller 200 implementing a speed or velocity control loop, a current controller 202 implementing an inner current and/or torque control loop, a DC two-axis reference frame to three axis reference frame converter component 204 (dq to abc converter receiving d axis and q axis values) that also receives an angle input Theta from the observer 211. The phase voltage commands $v^*_u$, $v^*_v$, $v^*_w$ are computed from the output of a d,q axis current regulator by the transformation equations:

$$v^*_u = v^*_d \sin(\theta) + v^*_q \cos(\theta)$$

$$v^*_v = v^*_d \sin(\theta - 2\pi/3) + v^*_q \cos(\theta - 2\pi/3)$$

$$v^*_w = v^*_d \sin(\theta + 2\pi/3) + v^*_q \cos(\theta + 2\pi/s)$$

A PWM component 206 generates pulse width modulated switching control signals 102 based on voltage control command values $v^*_u$, $v^*_v$, and $v^*_w$ to operate the switches of the inverter 46. In this example, the velocity controller 200 receives a speed setpoint or reference value Spref and a speed feedback signal Spfbk is received from the observer 211. In the example of Fig. 2, the velocity controller 200 provides a q-axis current reference signal or value $i^*_q$ as an input to the current controller 202. The current controller 202 also receives a d-axis current reference signal $i^*_d$ as well as current feedback signals or values $i_d$ and $i_q$, and provides d and q axis voltage reference values $v^*_d$ and $v^*_q$ to the converter component 204. The converter component 204 provides three-axis voltage reference signals or values $v^*_{mn}$ to the PWM component according to the estimated rotor EMF angular position Theta from the observer 211.

The controller 100 also receives one or more current values and/or one or more voltage values associated with the power converter system 40. In the example of FIG. 2, inverter output currents $i_u$, $i_v$, $i_w$ are measured and provided to a motor current computation component 120 which operates according to filter capacitor values 122, the speed feedback signal Spfbk or speed reference signal Spref from a previous control cycle, and measured or commanded drive output voltages $V_{uvw}$ or $v^*_{uvw}$ in order to compute the inverter-referred motor current feedback values $i_{a.m}$, $i_{b.m}$, $i_{c.m}$ for a current control cycle. Three-axis to two-axis (e.g., abc to $\alpha\beta$) converter components 208A and 208B generate $\alpha$ and $\beta$ axis current values $i_\alpha$, $i_\beta$ and voltage command values $v^*_\alpha$, $v^*_\beta$ for use by the observer 211. In addition, the current values $i_\alpha$ and $i_\beta$ are provided to an $\alpha$, $\beta$ to d, q converter component 210 which provides the current feedback signals or values $i_d$ and $i_q$ to the current controller 202 to implement a current control loop in the inverter controller 100. The converter component or components 208A and 208B receive three-axis values in an "a, b, c" reference frame and provide two-axis signals or values in an AC "$\alpha$, $\beta$" reference frame for use in estimating the angular position of the rotor of the driven motor 20 and/or the rotor speed of the driven motor 20, as well as for providing feedback current values to the current controller 202. As seen in FIG. 2, these values $i_\alpha$, $i_\beta$ and voltage command values $v^*_\alpha$, $v^*_\beta$ are in one example provided to an EMF based position observer 212 of the speed observer 211. In addition, the position observer 212 in one example receives a, $\beta$ reference frame voltage signals or values $v_\alpha$ and $v_\beta$ from the other converter component 208B. The position observer 212 provides the rotor EMF angular position estimate signal or value Theta to a velocity observer component 214, which provides a rotor velocity signal or value $\omega$ to an optional low pass filter (LPF) 216, which provides the speed feedback signal or value Spfbk to the velocity controller 200. The estimated rotor EMF angle Theta is also provided from the position observer 212 to the a, $\beta$ to d, q converter component 210 in order to provide the d and q axis current feedback signals to the current controller 202.

In operation, the controller 100 provides inverter switching control signals 102 to operate the switches S1-S6 of the inverter 46 to regulate the rotational speed of the motor 20 at least partially according to the inverter speed feedback value Spfbk using vector control. In addition, the current controller 202 uses the current feedback based on the computed inverter-referred motor current feedback values $i_{a.m}$, $i_{b.m}$, $i_{c.m}$ to control the inverter operation in the current control cycle. Moreover, the controller 100 employs one or more proportional-integral (PI) control components for velocity control (200 in FIG. 2) and current control (current controller 202 in FIG. 2) using vector control to form a multiple loop control configuration using data and instructions stored in the memory 104. In this regard, certain examples of the control configuration include an outer speed loop (e.g., sensorless speed control using observed position and/or speed) in addition to an inner current control loop (with a torque-to-current converter component to provide a current reference signal based on a torque reference signal or value from the speed or velocity PI controller 200). For example, speed and current PI control components 200 and 202 in the examples of Figs. 2-4 implement vector control for closed-loop regulation within the corresponding speed and current control loops in the controller 100.

In the illustrated examples, moreover, the controller 100 computes the speed feedback value Spfbk according to the at least one voltage or current value associated with the power conversion system 40 using the observer 211 that includes impedance parameters 122 of the filter 30, the transformer 50, the motor cable 60 and the motor 20 referred to a primary side of the transformer 50. A variety of different implementations of the observer 211 can be used in different examples. In the example of FIG. 2, the controller 100 implements the position observer 212 to compute the estimated position value Theta, which represents the angular position of the EMF (the motor terminal voltages generated by the motion of the rotor magnets) of the motor load 20 according to the voltage and/or current value(s) associated with the drive 40.

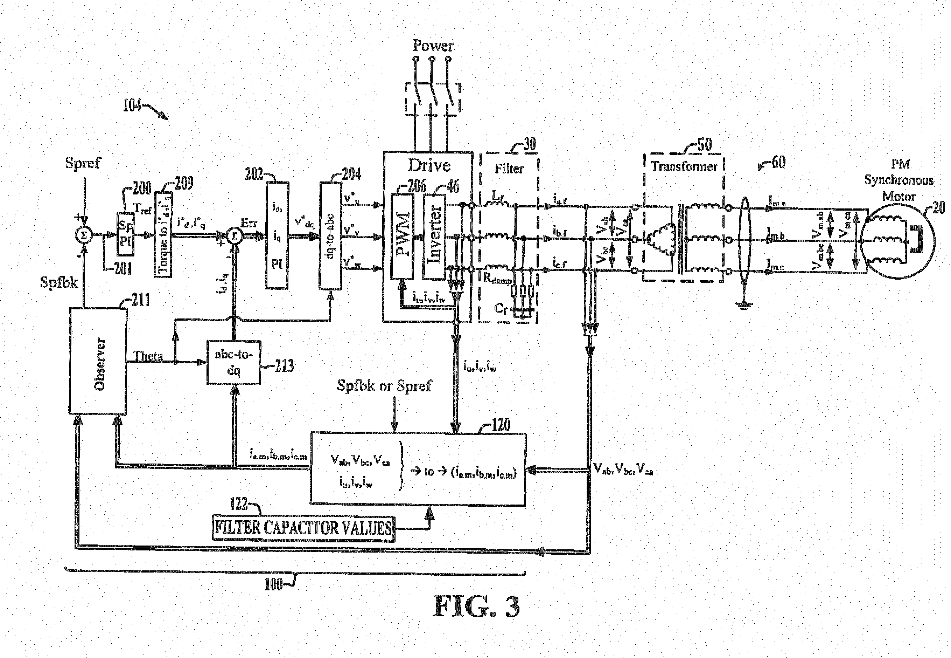

In FIG. 3, the observer 211 receives the voltage values $V_{ab}$, $V_{bc}$ and $V_{ca}$ measured at the output of the filter 30. The observer 211 in this case uses the measured line-line filter output voltage values $V_{ab}$, $V_{bc}$ and $V_{ca}$ along with the computed inverter-referred motor current feedback values $i_{a.m}$, $i_{b.m}$, $i_{c.m}$ from the component 120. In one example, the filter output voltage values $V_{ab}$, $V_{bc}$, $V_{cu}$ are line-line voltages measured at an output of the filter 30.

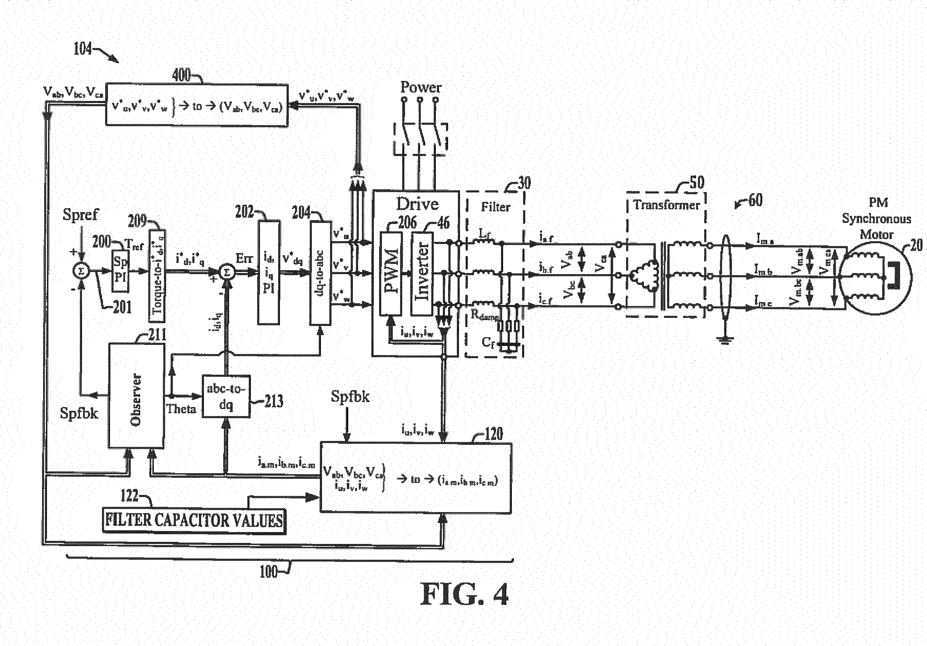

In the example of FIG. 4, the motor current computation component 120 and the observer 211 use computed or estimated line-line filter output voltage values $V_{ab}$, $V_{bc}$ and $V_{ca}$, which are based on conversion of the three-phase command voltage signals or values $v^*_u$, $v^*_v$ and $v^*_w$ from the conversion component 204 via a conversion component 400. Also in FIG. 4, the converter component 210 and the observer 211 use the computed inverter-referred motor current feedback values $i_{a.m}$, $i_{b.m}$, $i_{c.m}$ from the component 120. In one example in Fig. 2, the controller 100 implements the current PI control 202 or other current control function and transformation 204 to compute voltage command values $v^*_{uvw}$ and the PWM component 206 generates the inverter switching control signals 102, and the controller 100 implements the component 400 in Fig. 4 to compute the line-line filter output voltage values $V_{ab}$, $V_{bc}$, $V_{cu}$ according to voltage command values $v^*_{uvw}$.

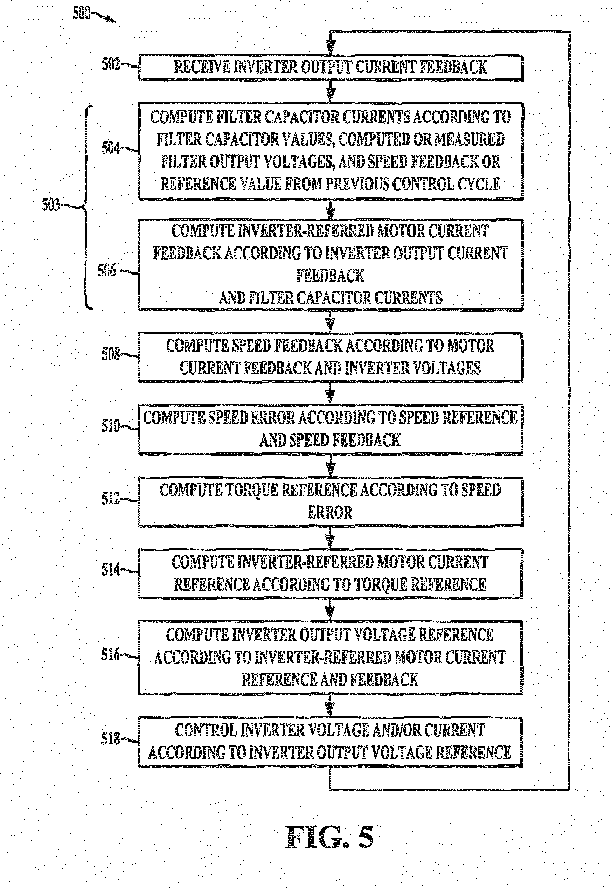

Referring also to FIG. 5, the controller 100 in one example implements a control process or method 500 in each of a succession of control periods or control cycles. The process 500 begins at 502, where the controller receives inverter output current feedback, such as the inverter output current values $i_u$, $i_u$, $i_w$, in one example. At 503, the controller 100 computes inverter-referred motor current feedback values $i_{a.m}$, $i_{b.m}$, $i_{c.m}$ for the current control cycle according to inverter output current values $i_u$, $i_v$, $i_w$, the capacitance values 122 representing capacitances of filter capacitors $C_f$ of the filter 30, the measured or computed filter output voltage values $V_{ab}$, $V_{bc}$, $V_{ca}$ in one example representing the line-line output voltages of the filter 30, and either the speed feedback value Spfbk or speed reference value Spref of a previous control cycle provided by the observer 211. In one example, the controller 100 computes the filter capacitor currents $i_{a.cf}$, $i_{b.cf}$, $i_{c.cf}$ (FIG. 1 above) at 504 according to the filter capacitor values $C_f$, the computed or measured filter output voltage values $V_{ab}$, $V_{bc}$, $V_{ca}$ and either the speed feedback value Spfbk or speed reference value Spref representing the electrical operating frequency of the inverter 46 in the previous control cycle. In this example, the controller 100 computes the inverter-referred motor current feedback at 506 in FIG. 5 as the difference between the inverter output current feedback values $i_u$, $i_v$, $i_w$, and the measured or computed filter capacitor current values $i_{a.cf}$, $i_{b.cf}$, $i_{c.cf}$.

At 508, the controller 100 computes the speed feedback value Spfbk for the current control cycle according to the inverter-referred motor current feedback values $i_{a.m}$, $i_{b.m}$, $i_{c.m}$ and the line-line filter output voltage values $V_{ab}$, $V_{bc}$, $V_{cu}$. At 510, the controller 100 computes a speed error value 201 according to a speed reference value Spref and the speed feedback value Spfbk (e.g., as the difference between these values), and the controller 100 computes a torque reference value Tref at 512 according to the speed error value 201. At 514, the controller 100 computes an inverter-referred motor current reference value $i^*_{d.q}$ according to the torque reference value Tref, and at 516 computes an inverter output voltage reference value $v^*_{d.q}$ according to the current reference value $i^*_{d.q}$ and the d-q transformed inverter-referred motor current feedback values $i_{a.m}$, $i_{b.m}$, $i_{c.m}$. At 518, the controller 100 provides the inverter switching control signals 102 to control the inverter 46 to regulate the rotational speed of the motor 20 according to the inverter output voltage reference value $v^*_{d.q}$. and thus controls the inverter 46 to regulate the motor speed at least partially according to the speed feedback value Spfbk using vector control. The process 500 then returns to 502 in which the above described processes is repeated for the next control cycle.

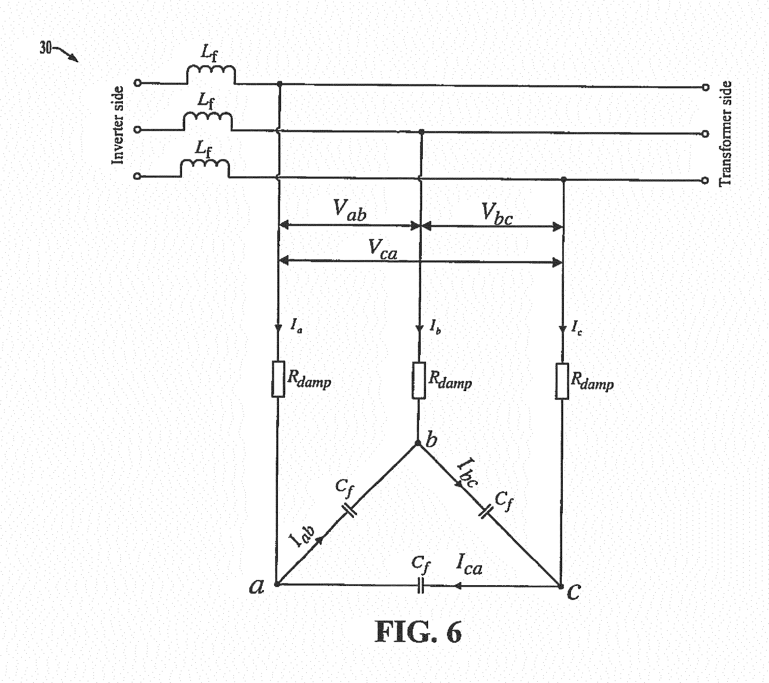

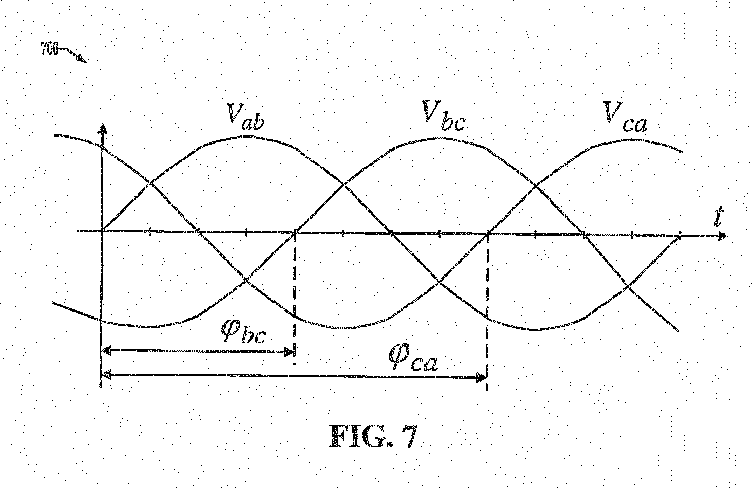

Referring now to Figs. 6-11, FIG. 6 illustrates further details of an example LC sine wave filter circuit 30, including filter inductors $L_f$, damping resistors $R_{damp}$ and delta-connected filter capacitors $C_f$, and FIG. 7 shows line-line filter output voltage waveforms in one example system. For filters 30 having delta-connected filter capacitors $C_f$, the delta-connected capacitor value is one third of the Y-connected capacitor value. The controller 100 in the delta case computes the inverter-referred motor current feedback values $i_{a.m}$, $i_{b.m}$ and $i_{c.m}$ (e.g., at 503 in FIG. 5 above) for filter output phases a, b and c in the current control cycle according to the following equations:

$$i_{a.m} = i_u - \omega * C_f * (3)^{1/2} * V_{bc}; \qquad (1)$$

$$i_{b.m} = i_v - \omega * C_f * (3)^{1/2} * Vca; \text{ and} \qquad (2)$$

$$i_{c.m} = i_u - \omega * C_f * (3)^{1/2} * Vab. \qquad (3)$$

In this example, $i_u$, $i_v$ and $i_w$ are the inverter output current values for inverter output phases u, v and w, $\omega$ is the angular frequency of the inverter output voltage commands $v^*_u$, $v^*_v$, and $v^*_w$, $C_f$ is the capacitance of the filter capacitors, and $V_{ab}$, $V_{bc}$ and $V_{ca}$ are the filter output voltage values representing line-line output voltages of the filter 30. The angular frequency $\omega$ is proportional to the speed feedback value Spfbk or speed reference value Spref for synchronous motor loads 20.

In another example, where the filter capacitors of the filter 30 are connected in a Y configuration, and wherein the controller 100 is configured to compute 503 the motor current feedback values ia.m, ib.m and ic.m for filter output phases a, b and c in the current control cycle according to the following equations:

$$i_{a.m} = i_u - \omega * C_f * (3)^{-1/2} * V_{bc}; \qquad (4)$$

$$i_{b.m} = i_v - \omega * C_f * (3)^{-1/2} * V_{ca}; \text{ and} \qquad (5)$$

$$i_{c.m} = i_u - \omega * C_f * (3)^{-1/2} * V_{ab}. \qquad (6)$$

In this case, $i_u$, $i_v$ and $i_w$ are the inverter output current values for inverter output phases u, v and w, $\omega$ is the angular frequency of the inverter output voltage commands $v^*_u$, $v^*_v$, and $v^*_w$, $C_f$ is the capacitance of the filter capacitors, and $V_{ab}$, $V_{bc}$ and $V_{ca}$ are the filter output voltage values representing line-line output voltages of the filter 30.

To calculate the fundamental harmonic of capacitor currents $i_{a.cf}$, $i_{b.cf}$, $i_{c.cf}$ based on line-to-line voltage measurement $V_{ab}$, $V_{bc}$, $V_{ca}$, the currents $I_{ab}$, $I_{bc}$, $I_{ca}$ are calculated based on the above line-to-line voltages. Damping resistors $R_{damp}$ are usually small enough that they can be ignored when calculating the currents $I_{ab}$, $I_{bc}$, $I_{ca}$. These resistors can be considered with Y-connected capacitor, but with delta-connected capacitors these currents $I_{ab}$, $I_{bc}$, $I_{ca}$ are not final capacitor currents to be calculated, and the error of the current computation will be negligible. FIG. 7 illustrates the line-line voltages. In general, each line can have different peak value and angles between voltages are not always 120 and 240 degrees. Therefore, these angles are represented as $\varphi_{bc}$ and $\varphi_{ca}$, and these voltages can be referred to as unbalanced voltages.

Line-to-line unbalanced voltages (general case) can be represented as follows:

$$V_{ab} = V_{ab.peak} Sin(\omega t) \quad \text{..............} \quad (7)$$

$$V_{bc} = V_{bc.peak} Sin(\omega t - \varphi_{bc}) \quad \text{..........} \quad (8)$$

$$V_{ca} = V_{ca.peak} Sin(\omega t - \varphi_{ca}) \quad \text{..........} \quad (9)$$

If line-to-line voltages are balanced, then equations (7-9) can be rewritten as follows:

$$V_{ab} = V_{peak} Sin(\omega t) \quad \text{..................} \quad (7a)$$

$$V_{bc} = V_{peak} Sin(\omega t - 120^0) \quad \text{..........} \quad (8a)$$

$$V_{ca} = V_{peak} Sin(\omega t - 240^0) \quad \text{..........} \quad (9a)$$

For unbalanced voltages, the currents $I_{ab}, I_{bc}, I_{ca}$ can be derived using equations 7-9 as follows:

$$I_{ab} = C_f \frac{dV_{ab}}{dt} = \omega C_f V_{ab.peak} Cos(\omega t) \quad \text{................} \quad (10)$$

$$I_{bc} = C_f \frac{dV_{bc}}{dt} = \omega C_f V_{bc.peak} Cos(\omega t - \varphi_{bc}) \quad \text{.........} \quad (11)$$

$$I_{ca} = C_f \frac{dV_{ca}}{dt} = \omega C_f V_{ca.peak} Cos(\omega t - \varphi_{ca}) \quad \text{.........} \quad (12)$$

For nodes "a, b, and c" according to Kirchhoff's law, the following formulas can be used:
For node "a"

$$I_a + I_{ca} - I_{ab} = 0 \quad \text{..........} \quad (13)$$

or

$$I_a = I_{ab} - I_{ca} \quad \text{........} \quad (14)$$

For node "b"

$$I_b + I_{ab} - I_{bc} = 0 \quad \text{..........} \quad (15)$$

or

$$I_b = I_{bc} - I_{ab} \dots\dots (16)$$

For node "c"

$$I_c + I_{bc} - I_{ca} = 0 \dots\dots\dots (17)$$

or

$$I_c = I_{ca} - I_{bc} \dots\dots (18)$$

From equations (10), (12), and (14) we can derive the following:

$$I_a = \omega C_f V_{ab.peak} Cos(\omega t) - \omega C_f V_{ca.peak} Cos(\omega t - \varphi_{ca}) = \omega C_f \{V_{ab.peak} Cos(\omega t) - V_{ca.peak}[Cos(\omega t)Cos(\varphi_{ca}) + Sin(\omega t)Sin(\varphi_{ca})]\} \dots(19)$$

After some manipulation, the following can be derived:

$$I_a = \omega C_f A_a Sin(\omega t + \varphi_a) \dots\dots\dots (20)$$

Where:

$$A_a = \sqrt{V_{ca.peak}^2 Sin^2(\varphi_{ca}) + \left(V_{ab.peak} - V_{ca.peak} Cos(\varphi_{ca})\right)^2} \dots\dots (21)$$

$$\varphi_a = arctg \frac{V_{ab.peak} - V_{ca.peak} Cos(\varphi_{ca})}{-V_{ca.peak} Sin(\varphi_{ca})} \dots\dots\dots (22)$$

From equations (10), (11), and (16) the following can be derived:

$$I_b = \omega C_f V_{bc.peak} Cos(\omega t - \varphi_{bc}) - \omega C_f V_{ab.peak} Cos(\omega t) = \omega C_f \{V_{bc.peak}[Cos(\omega t)Cos(\varphi_{bc}) + Sin(\omega t)Sin(\varphi_{bc})] - V_{ab.peak} Cos(\omega t)\}$$

$$\dots (23)$$

After some manipulation the following can be derived:

$$I_b = \omega C_f A_b Sin(\omega t + \varphi_b) \dots\dots\dots (24)$$

Where:

$$A_b = \sqrt{V_{bc.peak}^2 Sin^2(\varphi_{bc}) + \left(V_{bc.peak} Cos(\varphi_{bc}) - V_{ab.peak}\right)^2} \dots\dots (25)$$

$$\varphi_b = arctg \frac{V_{bc\,peak}Cos(\varphi_{bc})-V_{ab.peak}}{V_{bc.peak}Sin(\varphi_{bc})} \quad \dots\dots\dots\dots\dots\dots\dots\dots\dots\dots\dots\dots\dots (26)$$

From equations (11), (12), and (18) the following can be derived:

$$I_c = \omega C_f V_{ca\,peak}Cos(\omega t - \varphi_{ca}) - \omega C_f V_{bc\,peak}Cos(\omega t - \varphi_{bc}) \quad \dots\dots\dots\dots(27)$$

Or:

$$I_c = \omega C_f \{V_{ca.peak}[Cos(\omega t)Cos(\varphi_{ca}) + Sin(\omega t)Sin(\varphi_{ca})] - V_{bc.peak}[Cos(\omega t)Cos(\varphi_{bc}) + Sin(\omega t)Sin(\varphi_{bc})]\} \quad (28)$$

After some manipulation the following can be derived:

$$I_c = \omega C_f A_c Sin(\omega t + \varphi_c) \quad \dots\dots\dots\dots\dots\dots\dots\dots\dots\dots\dots\dots\dots\dots (29)$$

Where:

$$A_c = \sqrt{[V_{ca.peak}Sin(\varphi_{ca}) - V_{bc.peak}Sin(\varphi_{bc})]^2 + [V_{ca.peak}Cos(\varphi_{ca}) - V_{bc.peak}Cos(\varphi_{bc})]^2} \quad \dots\dots\dots (30)$$

$$\varphi_c = arctg \frac{V_{ca.peak}Cos(\varphi_{ca})-V_{bc.peak}Cos(\varphi_{bc})}{V_{ca.peak}Sin(\varphi_{ca})-V_{bc.peak}Sin(\varphi_{bc})} \quad \dots\dots\dots\dots\dots\dots\dots\dots\dots\dots\dots (31)$$

The phase angles $\varphi_{bc}$ and $\varphi_{ca}$ can also be determined as follows. FIG. 7 shows line-to-line voltage and angles ($\varphi_{bc}$, $\varphi_{ca}$) between these voltages.

Sum of line-to-line voltages always equal to zero as seen in the following equation (32):

$$V_{ab} \cdot Sin(\omega t) + V_{bc} \cdot Sin(\omega t + \varphi_{bc}) + V_{ca} \cdot Sin(\omega t + \varphi_{ca}) = 0 \quad \dots\dots (32)$$

Some further manipulation of equation (32) leads to the following equations (33) and (34):

$$V_{ab}\cdot Sin(\omega t)+V_{bc}\cdot Sin(\omega t+\varphi_{bc})+V_{ca}\cdot Sin(\omega t+\varphi_{ca})=$$
$$V_{ab}\cdot Sin(\omega t)+V_{bc}\cdot[Sin(\omega t)\cdot Cos(\varphi_{bc})+Cos(\omega t)\cdot Sin(\varphi_{bc})]+V_{ca}\cdot[Sin(\omega t)\cdot Cos(\varphi_{ca})+Cos(\omega t)\cdot Sin(\varphi_{ca})]=0 \quad (33)$$

$$[V_{ab}+V_{bc}\cdot Cos(\varphi_{bc})+V_{ca}\cdot Cos(\varphi_{ca})]\cdot Sin(\omega t)+[V_{bc}\cdot Sin(\varphi_{bc})+V_{ca}\cdot Sin(\varphi_{ca})]\cdot Cos(\omega t)=0 \quad (34)$$

Equation (34) can be divided into the following equations with two unknown variables: $\varphi_{bc}$ and $\varphi_{ca}$:

$$[V_{ab} + V_{bc} \cdot Cos(\varphi_{bc}) + V_{ca} \cdot Cos(\varphi_{ca})] \cdot Sin(\omega t) = 0 \quad \ldots\ldots \text{(35)}$$

$$[V_{bc} \cdot Sin(\varphi_{bc}) + V_{ca} \cdot Sin(\varphi_{ca})] \cdot Cos(\omega t) = 0 \quad \ldots\ldots\ldots \text{36)}$$

Or:

$$V_{ab} + V_{bc} \cdot Cos(\varphi_{bc}) + V_{ca} \cdot Cos(\varphi_{ca}) = 0 \quad \ldots\ldots\ldots \text{(37)}$$

$$V_{bc} \cdot Sin(\varphi_{bc}) + V_{ca} \cdot Sin(\varphi_{ca}) = 0 \quad \ldots\ldots\ldots\ldots \text{(38)}$$

Equation (38) we can rewrite as follows:

$$V_{bc} \cdot Sin(\varphi_{bc}) = -V_{ca} \cdot Sin(\varphi_{ca}) \quad \ldots\ldots \text{(39)}$$

Or

$$V_{bc}^2 \cdot Sin^2(\varphi_{bc}) = V_{ca}^2 \cdot Sin^2(\varphi_{ca}) \quad \ldots\ldots \text{(40)}$$

Equation (40) we can rewrite as follows:

$$V_{bc}^2 \cdot \left[1 - Cos^2(\varphi_{bc})\right] = V_{ca}^2 \cdot \left[1 - Cos^2(\varphi_{ca})\right] \quad \ldots\ldots \text{(41)}$$

Or:

$$V_{bc}^2 - V_{bc}^2 \cdot Cos^2(\varphi_{bc}) = V_{ca}^2 - V_{ca}^2 \cdot Cos^2(\varphi_{ca}) \quad \ldots\ldots \text{(42)}$$

the following equation (43) can be derived from equation (42):

$$V_{ca}^2 \cdot Cos^2(\varphi_{ca}) = V_{ca}^2 - V_{bc}^2 + V_{bc}^2 \cdot Cos^2(\varphi_{bc}) \quad \ldots\ldots \text{(43)}$$

Equation (43) we can rewritten as follows:

$$[V_{ab} + V_{bc} \cdot Cos(\varphi_{bc})]^2 = V_{ca}^2 \cdot Cos^2(\varphi_{ca}) \quad \ldots\ldots \text{(44)}$$

substituting equation (43) into equation (44) provides the following:

$$V_{ab}^2 + 2 \cdot V_{ab} \cdot V_{bc} \cdot Cos(\varphi_{bc}) + V_{bc}^2 \cdot Cos^2(\varphi_{bc}) = V_{ca}^2 - V_{bc}^2 + V_{bc}^2 \cdot Cos^2(\varphi_{bc}) \quad \dots (45)$$

From equation (45), the following can be derived:

$$Cos(\varphi_{bc}) = \frac{V_{ca}^2 - V_{bc}^2 - V_{ab}^2}{2 \cdot V_{ab} \cdot V_{bc}} \quad \dots\dots\dots\dots (46)$$

Or:

$$\varphi_{bc} = \arccos\left[\frac{V_{ca}^2 - V_{bc}^2 - V_{ab}^2}{2 \cdot V_{ab} \cdot V_{bc}}\right] \quad \dots\dots (47)$$

From equation (39), the following can be derived:

$$Sin(\varphi_{ca}) = -\frac{V_{bc} \cdot Sin(\varphi_{bc})}{V_{ca}} = -\frac{V_{bc} \cdot Sin\left[\arccos\left(\frac{V_{ca}^2 - V_{bc}^2 - V_{ab}^2}{2 \cdot V_{ab} \cdot V_{bc}}\right)\right]}{V_{ca}} \quad \dots (48)$$

There is a different way to derive the angle $\varphi_{ca}$. For example, from equation (40), the following can be derived:

$$V_{bc}^2 \cdot Cos^2(\varphi_{bc}) = V_{bc}^2 - V_{ca}^2 + V_{ca}^2 \cdot Cos^2(\varphi_{ca}) \quad \dots (49)$$

Equation (3), the following can be derived:

$$[V_{ab} + V_{ca} \cdot Cos(\varphi_{ca})]^2 = V_{bc}^2 \cdot Cos^2(\varphi_{bc}) \quad \dots\dots (50)$$

Substituting equation (49) into equation (50) provides the following:

$$V_{ab}^2 + 2 \cdot V_{ab} \cdot V_{ca} \cdot Cos(\varphi_{ca}) + V_{ca}^2 \cdot Cos(\varphi_{ca}) = V_{bc}^2 - V_{ca}^2 + V_{ca}^2 \cdot Cos^2(\varphi_{ca}) \quad \dots (51)$$

from equation (51), the following can be derived:

$$Cos(\varphi_{ca}) = \frac{V_{bc}^2 - V_{ca}^2 - V_{ab}^2}{2 \cdot V_{ab} \cdot V_{ca}} \quad \dots\dots (52)$$

Because angle $\varphi_{ca}$ must be around 2400 and Cos(1200) = Cos(2400) = -0.5, the following can be derived:

$$\varphi_{ca} = 120^0 + \arccos\left[\frac{V_{bc}^2 - V_{ca}^2 - V_{ab}^2}{2 \cdot V_{ab} \cdot V_{ca}}\right] \quad \dots\dots (53)$$

This yields the following:

$$\varphi_{bc} = \arccos\left[\frac{V_{ca}^2 - V_{bc}^2 - V_{ab}^2}{2 \cdot V_{ab} \cdot V_{bc}}\right] \quad \dots (54),$$

and

$$\varphi_{ca} = 120^0 + \arccos\left[\frac{V_{bc}^2 - V_{ca}^2 - V_{ab}^2}{2 \cdot V_{ab} \cdot V_{ca}}\right] \quad \dots (55)$$

For balanced voltages, the following calculations can be used:

$$V_{ab.peak} = V_{bc.peak} = V_{ca.peak} = V_{peak} \quad \dots\dots (56)$$

$$\varphi_{bc} = 120^0 \quad \text{and} \quad \varphi_{ca} = 240^0 \quad \dots\dots (57)$$

substituting equations (56) and (57) into equations 20-22, 24-26 and 29-34 yields the following:

$$I_a = \omega C_f \sqrt{3}\, V_{peak} Sin(\omega t + 60^0) \quad \dots\dots (58)$$

$$I_b = \omega C_f \sqrt{3}\, V_{peak} Sin(\omega t - 60^0) \quad \dots\dots (59)$$

$$I_c = -\omega C_f \sqrt{3}\, V_{peak} Sin(\omega t) \quad \dots\dots (60)$$

For practical capacitor current calculation, the above equations 58-60 relate to sin ($\omega$t), and thus relate to voltage $V_{ab} = V_{peak}\sin(\omega t)$. Accordingly, equations 58-60 can be modified as follows:

$$I_a = \omega C_f \sqrt{3}\, V_{peak} Sin(\omega t + 60^0 - 180^0) = -\omega C_f \sqrt{3}\, V_{peak} Sin(\omega t - 120^0) \quad \dots\dots (61)$$

$$I_b = \omega C_f \sqrt{3}\, V_{peak} Sin(\omega t - 60^0 - 180^0) = -\omega C_f \sqrt{3}\, V_{peak} Sin(\omega t - 240^0) \quad \dots\dots (62)$$

From the above, the final terms of equations (61) and (62) represent the quantities in the above equations 7a-9a. Substituting equations 7a-9a into equations 60-62 yields the following:

$$I_a = -\omega C_f \sqrt{3}\, V_{bc} \quad\quad .... (63)$$

$$I_b = -\omega C_f \sqrt{3}\, V_{ca} \quad\quad ..... (64)$$

$$I_c = -\omega C_f \sqrt{3}\, V_{ab} \quad\quad ..... (65)$$

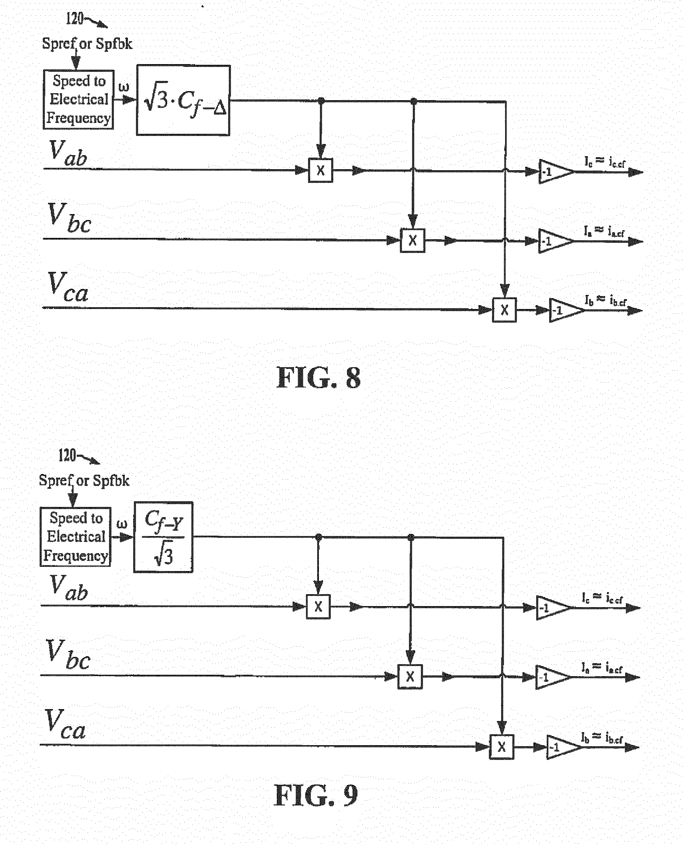

Referring also to Figs. 8-11, according to equations 63-65, the instantaneous capacitor currants are equal to appropriate line-to-line voltages with minus sign and adjustable gain. Consequently, the controller 100 in one example implements the logic shown in FIG. 8 for the conversion component 124 delta-connected filter capacitors. In this case, the $C_f$ value is the manufactured capacitance value of the filter capacitor component used in the filter 30. For Y-connected filter capacitors, the controller 100 implements the logic shown in FIG. 9, where the Y-connected capacitor value is equal to 1/3 of installed capacitor value.

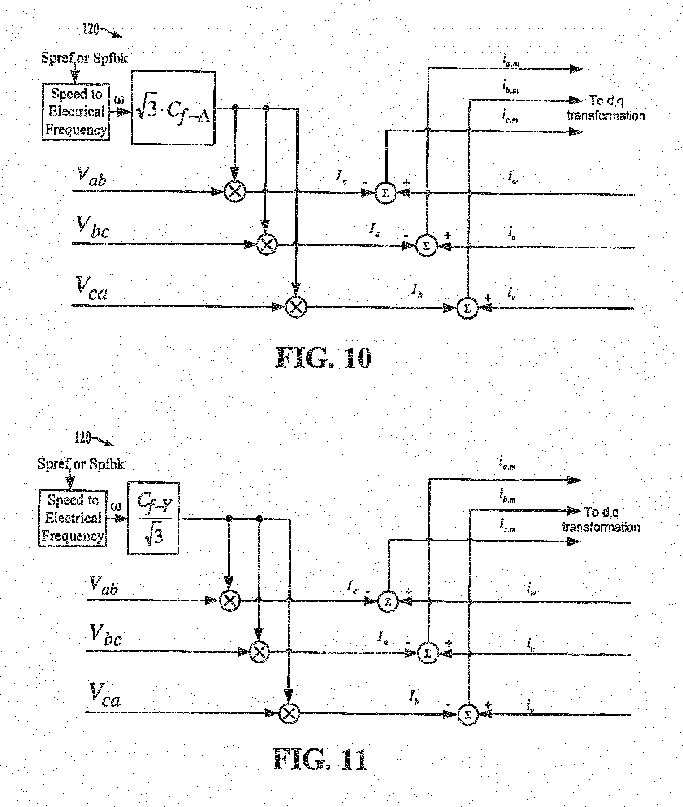

As seen in Figs. 10 and 11, the controller 100 computes the motor current according to the following equation $i_{mot} = i_{inverter} - i_{capacitor}$. For filters with delta-connected capacitors the phase currents drawn by the capacitors can be approximated by the following formulas:

$$i_{a.cf} \approx I_a = -\omega * C_f * (3)^{1/2} * V_{ab}$$

$$i_{b.cf} \approx I_b = -\omega * C_f * (3)^{1/2} * V_{ca}$$

$$i_{c.cf} \approx I_c = -\omega * C_f * (3)^{1/2} * V_{ab}$$

Where $\omega$ is the frequency of the inverter output voltages $V_u$, $V_v$, and $V_w$ in radians/second (e.g., Proportional to the estimated speed feedback value Spfbk from the previous control cycle), $C_f$ is the value of the filter capacitance between any two phases in Farads and the line-line voltages at the output terminals of the filter $V_{bc}$, $Y_{ca}$, $V_{ab}$, (in volts) can either be measured or approximated by:

$$V_{bc} = v_b^* - v_c^* \;;\; V_{ca} = v_c^* - v_a^* \;;\; V_{ab} = v_a^* - v_b^*$$

Where $v_a^*$, $v_b^*$, $v_c^*$ are phase voltage commands sent to a PWM modulator.

For filters with wye-connected capacitors the phase currents drawn by the capacitors can be approximated by the following formulas:

$$i_{a.cf} \approx I_a = -\omega * C_f * (3)^{-12} * V_{ab}$$

$$i_{b.cf} \approx I_b = -\omega * C_f * (3)^{-1/2} * V_{ca}$$

$$i_{c.cf} \approx I_c = -\omega * C_f * (3)^{-1/2} * V_{ab}$$

In systems where the currents of the filter capacitors are measured for diagnostic or other purposes, the measured capacitor current values can be used in place of the approximated capacitor current values to compute the inverter-referred motor feedback currents $i_{a.m}$, $i_{b.m}$ and $i_{c.m}$.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

**Claims**

1. A power conversion system (40), comprising:

an inverter (46) comprising a DC input (46A), an AC output (46B), and a plurality of switching devices (S1-S6) coupled between the DC input and the AC output and operative according to inverter switching control signals (102) to convert DC electrical power received at the DC input (46A) to provide AC electrical output power at the AC output (46B) to drive a motor (20) through an intervening filter (30); and
a controller (100) configured to:

compute (503) motor current feedback values ($i_{a.m}$, $i_{b.m}$, $i_{c.m}$) for a current control cycle according to inverter output current values ($i_u$, $i_v$, $i_w$), capacitance values representing capacitances of filter capacitors ($c_f$) of the filter (30), filter output voltage values ($V_{ab}$, $V_{bc}$, $V_{ca}$) representing output voltages of the filter (30), and a speed reference or feedback value (Spfbk) of a previous control cycle, wherein the motor current feedback values ($i_{a.m}$, $i_{b.m}$, $i_{c.m}$) are computed as a difference between the inverter output current values ($i_u$, $i_v$, $i_w$) and computed filter capacitor current values ($i_{a.cf}$, $i_{b.cf}$, $i_{c.cf}$),
compute (508) a speed feedback value (Spfbk) for the current control cycle according to the motor current feedback values ($i_{a.m}$, $i_{b.m}$, $i_{c.m}$) and the filter output voltage values ($V_{ab}$, $V_{bc}$, $V_{ca}$), and
control (518) the inverter (46) to regulate the rotational speed of the motor (20) at least partially according to the speed feedback value (Spfbk) using vector control.

2. The power conversion system (40) of claim 1, wherein the filter output voltage values ($V_{ab}$, $V_{bc}$, $V_{ca}$) are line-line voltages measured at an output of the filter (30).

3. The power conversion system (40) of claim 1, wherein the controller (100) is configured to implement a current control function (202) to compute voltage command values ($V^*_{abc}$) to generate the inverter switching control signals (102), and to compute the filter output voltage values ($V_{ab}$, $V_{bc}$, $V_{ca}$) according to voltage command values ($V^*_{abc}$).

4. The power conversion system (40) of claim 3, wherein the controller (100) is configured to compute the filter output voltage values ($V_{ab}$, $V_{bc}$, $V_{ca}$) as line-line voltages according to a set of phase voltage command values ($V^*_{abc}$).

5. The power conversion system (40) of claim 1,

wherein the filter capacitors of the filter (30) are connected in a delta configuration, and wherein the controller (100) is configured to compute (503) the motor current feedback values $i_{a.m}$, $i_{b.m}$ and $i_{c.m}$ for filter output phases a, b and c in the current control cycle according to the following equations:

$$i_{a.m} = i_u - \omega * C_f * (3)^{1/2} * V_{bc};$$

$$i_{b.m} = i_v - \omega * C_f * (3)^{1/2} * V_{ca};$$

and

$$i_{c.m} = i_u - \omega * C_f * (3)^{1/2} * V_{ab};$$

wherein $i_u$, $i_v$ and $i_w$ are the inverter output current values for inverter output phases u, v and w, $\omega$ is the angular frequency of inverter output voltage commands, $C_f$ is the capacitance of the filter capacitors, and $V_{ab}$, $V_{bc}$ and $V_{ca}$ are the filter output voltage values representing line-line output voltages of the filter (30);
or

wherein the filter capacitors of the filter (30) are connected in a Y configuration, and wherein the controller (100) is configured to compute (503) the motor current feedback values $i_{a.m}$, $i_{b.m}$ and $i_{c.m}$ for filter output phases a, b and c in the current control cycle according to the following equations:

$$i_{a.m} = i_u - \omega * C_f * (3)^{-1/2} * V_{bc};$$

$$i_{b.m} = i_v - \omega * C_f * (3)^{-1/2} * V_{ca};$$

and

$$i_{c.m} = i_u - \omega * C_f * (3)^{-1/2} * V_{ab};$$

wherein $i_u$, $i_v$ and $i_w$ are the inverter output current values for inverter output phases u, v and w, w is the angular frequency of inverter output voltage commands, $C_f$ is the capacitance of the filter capacitors, and $V_{ab}$, $V_{bc}$ and $V_{ca}$ are the filter output voltage values representing line-line output voltages of the filter (30).

6. The power conversion system (40) of claim 1,

wherein the controller (100) is configured to compute (508) the speed feedback value (Spfbk) for the current control cycle using an emf-based observer (211) according to the motor current feedback values ($i_{a.m}$, $i_{b.m}$, $i_{c.m}$) and the filter output voltage values ($V_{ab}$, $Vbc$, $V_{ca}$);
or
wherein the controller (100) is configured to:

compute (510) a speed error value (201) according to a speed reference value (Spref) and the speed feedback value (Spfbk);
compute (512) a torque reference value (Tref) according to the speed error value (201);
compute (514) a current reference value (Id,q_ref) according to the torque reference value (Tref);
compute (516) an inverter output reference value ($V_{d,q}$) according to the motor current reference value (Id,q_ref) and the motor current feedback values ($i_{a.m}$, $i_{b.m}$, $i_{c.m}$); and
provide the inverter switching control signals (102) to control (518) the inverter (46) to regulate the rotational speed of the motor (20) according to the inverter output reference value ($V_{d,q}$).

7. A method (500) for sensorless speed control of a motor (20) driven by an inverter (46) through an intervening filter (30), the method (500) comprising:

using at least one processor (102), computing (503) motor current feedback values ($i_{a.m}$, $i_{b.m}$, $i_{c.m}$) for a current control cycle according to inverter output current values ($i_u$, $i_v$, $i_w$), capacitance values representing capacitances of filter capacitors ($c_f$) of the filter (30), filter output voltage values ($V_{ab}$, $V_{bc}$, $V_{ca}$) representing output voltages of the filter (30), and a speed feedback or reference value (Spfbk) of a previous control cycle, wherein the motor current feedback values ($i_{a.m}$, $i_{b.m}$, $i_{c.m}$) are computed as a difference between the inverter output current values ($i_u$, $i_v$, $i_w$) and computed filter capacitor current values ($i_{a.cf}$, $i_{b.cf}$ $i_{c.cf}$);
using the at least one processor (102), computing (508) a speed feedback value (Spfbk) for the current control cycle according to the motor current feedback values ($i_{a.m}$, $i_{b.m}$, $i_{c.m}$) and the filter output voltage values ($V_{ab}$, $V_{bc}$, $V_{ca}$); and
using the at least one processor (102), controlling (518) the inverter (46) to regulate the rotational speed of the motor (20) at least partially according to the speed feedback value (Spfbk) using vector control.

8. The method (500) of claim 7, comprising measuring the filter output voltage values ($V_{ab}$, $V_{bc}$, $V_{ca}$) as line-line voltages at an output of the filter (30).

9. The method (500) of claim 7, comprising, using the at least one processor (102), implementing a current control function (202) to compute voltage command values ($V^*_{abc}$) to generate the inverter switching control signals (102), and computing the filter output voltage values ($V_{ab}$, $V_{bc}$, $V_{ca}$) according to voltage command values ($V^*_{abc}$).

**10.** The method (500) of claim 9, comprising, using the at least one processor (102), computing the filter output voltage values ($V_{ab}$, $V_{bc}$, $V_{ca}$) as line-line voltages according to a set of phase voltage command values ($V^*_{abc}$).

**11.** The method (500) of claim 7,

wherein the filter capacitors of the filter (30) are connected in a delta configuration, comprising, using the at least one processor (102), computing (503) the motor current feedback values $i_{a.m}$, $i_{b.m}$ and $i_{c.m}$ for filter output phases a, b and c in the current control cycle according to the following equations:

$$i_{a.m} = i_u - \omega * C_f * (3)^{1/2} * V_{bc};$$

$$i_{b.m} = i_v - \omega * C_f * (3)^{1/2} * V_{ca};$$

and

$$i_{c.m} = i_u - \omega * C_f * (3)^{1/2} * V_{ab};$$

wherein $i_u$, $i_v$ and $i_w$ are the inverter output current values for inverter output phases u, v and w, $\omega$ the angular frequency of inverter output voltage commands, $C_f$ is the capacitance of the filter capacitors, and $V_{ab}$, $V_{bc}$ and $V_{ca}$ are the filter output voltage values representing line-line output voltages of the filter (30);
or
wherein the filter capacitors of the filter (30) are connected in a Y configuration, comprising, using the at least one processor (102), computing (503) the motor current feedback values $i_{a.m}$, $i_{b.m}$ and $i_{c.m}$ for filter output phases a, b and c in the current control cycle according to the following equations:

$$i_{a.m} = i_u - \omega * C_f * (3)^{-1/2} * V_{bc};$$

$$i_{b.m} = i_v - \omega * C_f * (3)^{-1/2} * V_{ca};$$

and

$$i_{c.m} = i_u - \omega * C_f * (3)^{-1/2} * V_{ab};$$

wherein $i_u$, $i_v$ and $i_w$ are the inverter output current values for inverter output phases u, v and w, $\omega$ the angular frequency of inverter output voltage commands, $C_f$ is the capacitance of the filter capacitors, and $V_{ab}$, $V_{bc}$ and $V_{ca}$ are the filter output voltage values representing line-line output voltages of the filter (30).

**12.** The method (500) of claim 7, comprising, using the at least one processor (102), computing (508) the speed feedback value (Spfbk) for the current control cycle using an emf-based observer (211) according to the motor current feedback values ($i_{a.m}$, $i_{b.m}$, $i_{c.m}$) and the filter output voltage values ($V_{ab}$, $V_{bc}$, $V_{ca}$).

**13.** The method (500) of claim 7, comprising:

using the at least one processor (102), computing (510) a speed error value (201) according to a speed reference value (Spref) and the speed feedback value (Spfbk);
using the at least one processor (102), computing (512) a torque reference value (Tref) according to the speed error value (201);
using the at least one processor (102), computing (514) a current reference value (Id,q_ref) according to the torque reference value (Tref);
using the at least one processor (102), computing (516) an inverter output reference value ($V_{d,q}$) according to the motor current reference value (Id,q_ref) and the motor current feedback values ($i_{a.m}$, $i_{b.m}$, $i_{c.m}$); and

using the at least one processor (102), providing the inverter switching control signals (102) to control (518) the inverter (46) to regulate the rotational speed of the motor (20) according to the inverter output reference value ($V_{d,q}$).

14. A non-transitory computer readable medium (104), comprising computer readable instructions which, when executed by at least one processor (102) cause the at least one processor (102) to perform:

computing (503) motor current feedback values ($i_{a.m}$, $i_{b.m}$, $i_{c.m}$) for a current control cycle according to inverter output current values ($i_u$, $i_v$, $i_w$), capacitance values representing capacitances of filter capacitors ($c_f$) of the filter (30), filter output voltage values ($V_{ab}$, $V_{bc}$, $V_{ca}$) representing output voltages of the filter (30), and a speed feedback or reference value (Spfbk) of a previous control cycle, wherein the motor current feedback values ($i_{a.m}$, $i_{b.m}$, $i_{c.m}$) are computed as a difference between the inverter output current values ($i_u$, $i_v$, $i_w$) and computed filter capacitor current values ($i_{a.cf}$, $i_{b.cf}$, $i_{c.cf}$);
computing (508) a speed feedback value (Spfbk) for the current control cycle according to the motor current feedback values ($i_{a.m}$, $i_{b.m}$, $i_{c.m}$) and the filter output voltage values ($V_{ab}$, $V_{bc}$, $V_{ca}$); and
controlling (518) the inverter (46) to regulate the rotational speed of the motor (20) at least partially according to the speed feedback value (Spfbk) using vector control.

15. A power conversion system, comprising:

an inverter comprising a DC input, an AC output, and a plurality of switching devices coupled between the DC input and the AC output and operative according to inverter switching control signals to convert DC electrical power received at the DC input to provide AC electrical output power at the AC output to drive a motor through an intervening filter; and
a controller configured to:

compute motor current feedback values ($i_{a.m}$, $i_{b.m}$, $i_{c.m}$) for a current control cycle according to inverter output current values ($i_u$, $i_v$, $i_w$) and measured filter capacitor current values ($i_{a.cf}$, $i_{b.cf}$, $k_{c.cf}$), wherein the motor current feedback values ($i_{a.m}$, $i_{b.m}$, $i_{c.m}$) are computed as a difference between the inverter output current values ($i_u$, $i_v$, $i_w$) and the measured filter capacitor current values ($i_{a.cf}$, $i_{b.cf}$, $i_{c.cf}$),
compute a speed feedback value (Spfbk) for the current control cycle according to the motor current feedback values ($i_{a.m}$, $i_{b.m}$, $i_{c.m}$) and the filter output voltage values ($V_{ab}$, $V_{bc}$, $V_{ca}$), and
control the inverter to regulate the rotational speed of the motor at least partially according to the speed feedback value (Spfbk) using vector control.

**Patentansprüche**

1. Leistungsumwandlungssystem (40), umfassend:

einen Umrichter (46), der einen Gleichstromeingang (46A), einen Wechselstromausgang (46B) und mehrere Schaltvorrichtungen (S1-S6) umfasst, die zwischen dem Gleichstromeingang und dem Wechselstromausgang gekoppelt sind und gemäß Umrichterschaltsteuersignalen (102) betrieben werden, um am Gleichstromeingang (46A) empfangene elektrische Gleichstromleistung zu wandeln, um elektrische Wechselstromausgangsleistung am Wechselstromausgang (46B) bereitzustellen, um einen Motor (20) durch einen dazwischenliegenden Filter (30) anzutreiben; und
eine Steuerung (100), die eingerichtet ist zum:

Berechnen (503) von Motorstromrückkopplungswerten ($i_{a.m}$, $i_{b.m}$, $i_{c.m}$) für einen aktuellen Steuerzyklus gemäß Umrichterausgangsstromwerten ($i_u$, $i_v$, $i_w$), Kapazitätswerten, die Kapazitäten von Filterkondensatoren ($c_f$) des Filters (30) darstellen, Filterausgangsspannungswerte ($V_{ab}$, $V_{bc}$, $V_{ca}$), die Ausgangsspannungen des Filters (30) darstellen, und eines Geschwindigkeitsreferenz- oder Rückkopplungswerts (Spfbk) eines vorherigen Steuerzyklus, wobei die Motorstromrückkopplungswerte ($i_{a.m}$, $i_{b.m}$, $i_{c.m}$) als Differenz zwischen den Umrichterausgangsstromwerten ($i_u$, $i_v$, $i_w$) und berechneten Filterkondensatorstromwerten ($i_{a.cf}$, $i_{b.cf}$, $i_{c.cf}$) berechnet werden,
Berechnen (508) eines Geschwindigkeitsrückkopplungswerts (Spfbk) für den aktuellen Steuerzyklus gemäß den Motorstromrückkopplungswerten ($i_{a.m}$, $i_{b.m}$, $i_{c.m}$) und den Filterausgangsspannungswerten ($V_{ab}$, $V_{bc}$, $V_{ca}$); und

Steuern (518) des Umrichters (46), um die Rotationsgeschwindigkeit des Motors (20) zumindest teilweise gemäß dem Geschwindigkeitsrückkopplungswert (Spfbk) unter Verwendung einer Vektorsteuerung zu regeln.

2. Leistungsumwandlungssystem (40) nach Anspruch 1, wobei die Filterausgangsspannungswerte ($V_{ab}$, $V_{bc}$, $V_{ca}$) Leitungs-Leitungs-Spannungen sind, die an einem Ausgang des Filters (30) gemessen werden.

3. Leistungsumwandlungssystem (40) nach Anspruch 1, wobei die Steuerung (100) eingerichtet ist, eine Stromsteuerfunktion (202) zu implementieren, um Spannungsbefehlswerte ($V^{*}_{abc}$) zu berechnen, um die Umrichterschaltsteuersignale (102) zu erzeugen und die Filterausgangsspannungswerte ($V_{ab}$, $V_{bc}$, $V_{ca}$) gemäß den Spannungsbefehlswerten ($V^{*}_{abc}$) zu berechnen.

4. Leistungsumwandlungssystem (40) nach Anspruch 3, wobei die Steuerung (100) eingerichtet ist, die Filterausgangsspannungswerte ($V_{ab}$, $V_{bc}$, $V_{ca}$) als Leitungs-Leitungs-Spannungen gemäß einem Satz von Phasenspannungsbefehlswerten ($V^{*}_{abc}$) zu berechnen.

5. Leistungsumwandlungssystem (40) nach Anspruch 1,
wobei die Filterkondensatoren des Filters (30) in einer Delta-Konfiguration verbunden sind und wobei die Steuerung (100) eingerichtet ist, die Motorstromrückkopplungswerte $i_{a.m}$, $i_{b.m}$ und $i_{c.m}$ für Filterausgangphasen a, b und c im aktuellen Steuerzyklus nach folgenden Gleichungen zu berechnen (503):

$$i_{a.m} = i_u - \omega * C_f * (3)^{1/2} * V_{bc};$$

$$i_{b.m} = i_v - \omega * C_f * (3)^{1/2} * V_{ca};$$

und

$$i_{c.m} = i_u - \omega * C_f * (3)^{1/2} * V_{ab};$$

wobei $i_u$, $i_v$ und $i_w$ die Umrichterausgangsstromwerte für die Umrichterausgangsphasen u, v und w sind, $\omega$ die Winkelfrequenz von Umrichterausgangsspannungsbefehlen ist, $C_f$ die Kapazität der Filterkondensatoren ist und $V_{ab}$, $V_{bc}$ und $V_{ca}$ die Filterausgangsspannungswerte, die Leitungs-Leitungs-Ausgangsspannungen des Filters (30) darstellen, sind;
oder
wobei die Filterkondensatoren des Filters (30) in einer Y-Konfiguration verbunden sind und wobei die Steuerung (100) eingerichtet ist, die Motorstromrückkopplungswerte $i_{a.m}$, $i_{b.m}$ und $i_{c.m}$ für Filterausgangsphasen a, b und c im aktuellen Steuerzyklus nach folgenden Gleichungen zu berechnen (503):

$$i_{a.m} = i_u - \omega * C_f * (3)^{-1/2} * V_{bc};$$

$$i_{b.m} = i_v - \omega * C_f * (3)^{-1/2} * V_{ca};$$

und

$$i_{c.m} = i_u - \omega * C_f * (3)^{-1/2} * V_{ab};$$

wobei $i_u$, $i_v$ und $i_w$ die Umrichterausgangsstromwerte für die Umrichterausgangsphasen u, v und w sind, $\omega$ die Winkelfrequenz von Umrichterausgangsspannungsbefehlen ist, $C_f$ die Kapazität der Filterkondensatoren ist und $V_{ab}$, $V_{bc}$ und $V_{ca}$ die Filterausgangsspannungswerte, die Leitungs-Leitungs-Ausgangsspannungen des Filters (30) darstellen, sind.

**6.** Leistungsumwandlungssystem (40) nach Anspruch 1,
wobei die Steuerung (100) eingerichtet ist, den Geschwindigkeitsrückkopplungswert (Spfbk) für den aktuellen Steuerzyklus unter Verwendung eines EMF-basierten Beobachters (211) gemäß den Motorstromrückkopplungswerten ($i_{a.m}$, $i_{b.m}$, $i_{c.m}$) und den Filterausgangsspannungswerte ($V_{ab}$, $V_{bc}$, $V_{ca}$) zu berechnen (508);
oder
wobei die Steuerung (100) eingerichtet ist zum:

Berechnen (510) eines Geschwindigkeitsfehlerwerts (201) gemäß einem Geschwindigkeitsreferenzwert (Spref) und dem Geschwindigkeitsrückkopplungswert (Spfbk);
Berechnen (512) eines Drehmomentreferenzwerts (Tref) gemäß dem Geschwindigkeitsfehlerwert (201);
Berechnen (514) eines Stromreferenzwerts (Id, q_ref) gemäß dem Drehmomentreferenzwert (Tref);
Berechnen (516) eines Umrichterausgangsreferenzwerts (Vd, q) gemäß dem Motorstromreferenzwert (Id, q_ref) und den Motorstromrückkopplungswerten ($i_{a.m}$, $i_{b.m}$, $i_{c.m}$); und
Bereitstellen der Umrichterschaltsteuersignale (102), um den Umrichter (46) zu steuern (518), um die Rotationsgeschwindigkeit des Motors (20) gemäß dem Umrichterausgangsreferenzwert ($V_{d,q}$) zu regeln.

**7.** Verfahren (500) zur sensorlosen Geschwindigkeitssteuerung eines Motors (20), der von einem Umrichter (46) über einen dazwischenliegenden Filter (30) angetrieben wird, wobei das Verfahren (500) umfasst:

unter Verwendung von mindestens einem Prozessor (102), Berechnen (503) von Motorstromrückkopplungswerten ($i_{a.m}$, $i_{b.m}$, $i_{c.m}$) für einen aktuellen Steuerzyklus gemäß Umrichterausgangsstromwerten ($i_u$, $i_v$, $i_w$), Kapazitätswerten, die Kapazitäten von Filterkondensatoren ($c_f$) des Filters (30) darstellen, Filterausgangsspannungswerte ($V_{ab}$, $V_{bc}$, $V_{ca}$), die Ausgangsspannungen des Filters (30) darstellen, und eines Geschwindigkeitsrückkopplungs- oder Referenzwerts (Spfbk) eines vorherigen Steuerzyklus, wobei die Motorstromrückkopplungswerte ($i_{a.m}$, $i_{b.m}$, $i_{c.m}$) als Differenz zwischen den Umrichterausgangsstromwerten ($i_u$, $i_v$, $i_w$) und berechneten Filterkondensatorstromwerten ($i_{a.cf}$, $i_{b.cf}$, $i_{c.cf}$) berechnet werden,
unter Verwendung des mindestens einen Prozessors (102), Berechnen (508) eines Geschwindigkeitsrückkopplungswerts (Spfbk) für den aktuellen Steuerzyklus gemäß den Motorstromrückkopplungswerten ($i_{a.m}$, $i_{b.m}$, $i_{c.m}$) und den Filterausgangsspannungswerten ($V_{ab}$, $V_{bc}$, $V_{ca}$); und
unter Verwendung des mindestens einen Prozessors (102), Steuern (518) des Umrichters (46), um die Rotationsgeschwindigkeit des Motors (20) zumindest teilweise gemäß dem Geschwindigkeitsrückkopplungswert (Spfbk) unter Verwendung einer Vektorsteuerung zu regeln.

**8.** Verfahren (500) nach Anspruch 7, umfassend Messen der Filterausgangsspannungswerte ($V_{ab}$, $V_{bc}$, $V_{ca}$) als Leitungs-Leitungs-Spannungen an einem Ausgang des Filters (30).

**9.** Verfahren (500) nach Anspruch 7, umfassend unter Verwendung des mindestens einen Prozessors (102), Implementieren einer Stromsteuerfunktion (202), um Spannungsbefehlswerte ($V^*_{abc}$) zu berechnen, um die Umrichterschaltsteuersignale (102) zu erzeugen und die Filterausgangsspannungswerte ($V_{ab}$, $V_{bc}$, $V_{ca}$) gemäß den Spannungsbefehlswerten ($V^*_{abc}$) zu berechnen.

**10.** Verfahren (500) nach Anspruch 9, umfassend unter Verwendung des mindestens einen Prozessors (102), Berechnen der Filterausgangsspannungswerte ($V_{ab}$, $V_{bc}$, $V_{ca}$) als Leitungs-Leitungs-Spannungen gemäß einem Satz von Phasenspannungsbefehlswerten ($V^*_{abc}$).

**11.** Verfahren (500) nach Anspruch 7,
wobei die Filterkondensatoren des Filters (30) in einer Delta-Konfiguration verbunden sind und umfassend, unter Verwendung des mindestens einen Prozessors (102, Berechnen (503) der Motorstromrückkopplungswerte $i_{a.m}$, $i_{b.m}$ und $i_{c.m}$ für Filterausgangphasen a, b und c im aktuellen Steuerzyklus nach folgenden Gleichungen:

$$i_{a.m} = i_u - \omega * C_f * (3)^{1/2} * V_{bc};$$

$$i_{b.m} = i_v - \omega * C_f * (3)^{1/2} * V_{ca};$$

und

$$i_{c.m} = i_u - \omega * C_f * (3)^{1/2} * V_{ab};$$

wobei $i_u$, $i_v$ und $i_w$ die Umrichterausgangsstromwerte für die Umrichterausgangsphasen u, v und w sind, $\omega$ die Winkelfrequenz von Umrichterausgangsspannungsbefehlen ist, $C_f$ die Kapazität der Filterkondensatoren ist und $V_{ab}$, $V_{bc}$ und $V_{ca}$ die Filterausgangsspannungswerte, die Leitungs-Leitungs-Ausgangsspannungen des Filters (30) darstellen, sind;
oder
wobei die Filterkondensatoren des Filters (30) in einer Y-Konfiguration verbunden sind und umfassend, unter Verwendung des mindestens einen Prozessors (102), Berechnen (503) der Motorstromrückkopplungswerte $i_{a.m}$, $i_{b.m}$ und $i_{c.m}$ für Filterausgangsphasen a, b und c im aktuellen Steuerzyklus nach folgenden Gleichungen:

$$i_{a.m} = i_u - \omega * C_f * (3)^{-1/2} * V_{bc};$$

$$i_{b.m} = i_v - \omega * C_f * (3)^{-1/2} * V_{ca};$$

und

$$i_{c.m} = i_u - \omega * C_f * (3)^{-1/2} * V_{ab};$$

wobei $i_u$, $i_v$ und $i_w$ die Umrichterausgangsstromwerte für die Umrichterausgangsphasen u, v und w sind, $\omega$ die Winkelfrequenz von Umrichterausgangsspannungsbefehlen ist, $C_f$ die Kapazität der Filterkondensatoren ist und $V_{ab}$, $V_{bc}$ und $V_{ca}$ die Filterausgangsspannungswerte, die Leitungs-Leitungs-Ausgangsspannungen des Filters (30) darstellen, sind.

12. Verfahren (500) nach Anspruch 7, umfassend, unter Verwendung des mindestens einen Prozessors (102), Berechnen (508) des Geschwindigkeitsrückkopplungswert (Spfbk) für den aktuellen Steuerzyklus unter Verwendung eines EMF-basierten Beobachters (211) gemäß den Motorstromrückkopplungswerten ($i_{a.m}$, $i_{b.m}$, $i_{c.m}$) und den Filterausgangsspannungswerte ($V_{ab}$, $V_{bc}$, $V_{ca}$).

13. Verfahren (500) nach Anspruch 7, umfassend:

unter Verwendung des mindestens einen Prozessors (102), Berechnen (510) eines Geschwindigkeitsfehlerwerts (201) gemäß einem Geschwindigkeitsreferenzwert (Spref) und dem Geschwindigkeitsrückkopplungswert (Spfbk);
unter Verwendung des mindestens einen Prozessors (102), Berechnen (512) eines Drehmomentreferenzwerts (Tref) gemäß dem Geschwindigkeitsfehlerwert (201);
unter Verwendung des mindestens einen Prozessors (102), Berechnen (514) eines Stromreferenzwerts (Id, q_ref) gemäß dem Drehmomentreferenzwert (Tref);
unter Verwendung des mindestens einen Prozessors (102), Berechnen (516) eines Umrichterausgangsreferenzwerts ($V_{d,q}$) gemäß dem Motorstromreferenzwert (Id, q_ref) und den Motorstromrückkopplungswerten ($i_{a.m}$, $i_{b.m}$, $i_{c.m}$); und
unter Verwendung des mindestens einen Prozessors (102), Bereitstellen der Umrichterschaltsteuersignale (102), um den Umrichter (46) zu steuern (518), um die Rotationsgeschwindigkeit des Motors (20) gemäß dem Umrichterausgangsreferenzwert ($V_{d,q}$) zu regeln.

14. Ein nicht vorübergehendes computerlesbares Medium (104), das computerlesbare Anweisungen umfasst, die, wenn sie von mindestens einem Prozessor (102) ausgeführt werden, bewirken, dass der mindestens eine Prozessor (102) Folgendes ausführt:

Berechnen (503) von Motorstromrückkopplungswerten ($i_{a.m}$, $i_{b.m}$, $i_{c.m}$) für einen aktuellen Steuerzyklus gemäß Umrichterausgangsstromwerten ($i_u$, $i_v$, $i_w$), Kapazitätswerten, die Kapazitäten von Filterkondensatoren ($c_f$) des Filters (30) darstellen, Filterausgangsspannungswerte ($V_{ab}$, $V_{bc}$, $V_{ca}$), die Ausgangsspannungen des Filters (30) darstellen, und eines Geschwindigkeitsrückkopplungs- oder Referenzwerts (Spfbk) eines vorherigen Steuerzyklus, wobei die Motorstromrückkopplungswerte ($i_{a.m}$, $i_{b.m}$, $i_{c.m}$) als Differenz zwischen den Umrichterausgangsstromwerten ($i_u$, $i_v$, $i_w$) und berechneten Filterkondensatorstromwerten ($i_{a.cf}$, $i_{b.cf}$, $i_{c.cf}$) berechnet werden, Berechnen (508) eines Geschwindigkeitsrückkopplungswerts (Spfbk) für den aktuellen Steuerzyklus gemäß den Motorstromrückkopplungswerten ($i_{a.m}$, $i_{b.m}$, $i_{c.m}$) und den Filterausgangsspannungswerten ($V_{ab}$, $V_{bc}$, $V_{ca}$); und

Steuern (518) des Umrichters (46), um die Rotationsgeschwindigkeit des Motors (20) zumindest teilweise gemäß dem Geschwindigkeitsrückkopplungswert (Spfbk) unter Verwendung einer Vektorsteuerung zu regeln.

**15.** Leistungsumwandlungssystem (40), umfassend:

einen Umrichter, der einen Gleichstromeingang, einen Wechselstromausgang und mehrere Schaltvorrichtungen umfasst, die zwischen dem Gleichstromeingang und dem Wechselstromausgang gekoppelt sind und gemäß Umrichterschaltsteuersignalen betrieben werden, um am Gleichstromeingang empfangene elektrische Gleichstromleistung zu wandeln, um elektrische Wechselstromausgangsleistung am Wechselstromausgang bereitzustellen, um einen Motor durch einen dazwischenliegenden Filter anzutreiben; und eine Steuerung (100), die eingerichtet ist zum:

Berechnen von Motorstromrückkopplungswerten ($i_{a.m}$, $i_{b.m}$, $i_{c.m}$) für einen aktuellen Steuerzyklus gemäß Umrichterausgangsstromwerten ($i_u$, $i_v$, $i_w$) und gemessenen Filterkondensatorstromwerten ($i_{a,cf}$, $i_{b,cf}$, $i_{c,cf}$), wobei die Motorstromrückkopplungswerte ($i_{a.m}$, $i_{b.m}$, $i_{c.m}$) als Differenz zwischen den Umrichterausgangsstromwerten ($i_u$, $i_v$, $i_w$) und den gemessenen Filterkondensatorstromwerten ($i_{a.cf}$, $i_{b.cf}$, $i_{c.cf}$) berechnet werden, Berechnen eines Geschwindigkeitsrückkopplungswerts (Spfbk) für den aktuellen Steuerzyklus gemäß den Motorstromrückkopplungswerten ($i_{a.m}$, $i_{b.m}$, $i_{c.m}$) und den Filterausgangsspannungswerten ($V_{ab}$, $V_{bc}$, $V_{ca}$); und

Steuern des Umrichters, um die Rotationsgeschwindigkeit des Motors zumindest teilweise gemäß dem Geschwindigkeitsrückkopplungswert (Spfbk) unter Verwendung einer Vektorsteuerung zu regeln.

## Revendications

**1.** Système de conversion de puissance (40) comprenant :

un onduleur (46) comprenant une entrée DC (46A), une sortie AC (46B) et une pluralité de dispositifs de commutation (S1-S6) branchés entre l'entrée DC et la sortie AC et opérant en fonction de signaux de commande de commutation d'onduleur (102) pour convertir une puissance électrique DC reçue au niveau de l'entrée DC (46A) et fournir une puissance de sortie électrique AC au niveau de la sortie AC (46B) pour entraîner un moteur (20) par l'intermédiaire d'un filtre intercalé (30) ; et un régulateur (100) configuré pour :

calculer (503) des valeurs de réaction de courant de moteur ($i_{a.m}$, $i_{b.m}$, $i_{c.m}$) pour un cycle de commande de courant en fonction de valeurs de courant de sortie d'onduleur ($i_u$, $i_v$, $i_w$), de valeurs de capacité représentant les capacités de condensateurs de filtre ($C_f$) du filtre (30), de valeurs de tension de sortie de filtre ($V_{ab}$, $V_{bc}$, $Vca$) représentant des tensions de sortie du filtre (30) et d'une valeur de référence ou de réaction de vitesse (Spfbk) d'un cycle de commande antérieur, dans lequel les valeurs de réaction de courant de moteur ($i_{a.m}$, $i_{b.m}$, $i_{c.m}$) sont calculées en tant que différence entre les valeurs de courant de sortie d'onduleur ($i_u$, $i_v$, $i_w$) et des valeurs de courant de condensateur de filtre calculées ($i_{a.cf}$, $i_{b.cf}$, $i_{c.cf}$), calculer (508) une valeur de réaction de vitesse (Spfbk) pour le cycle de commande de courant en fonction des valeurs de réaction de courant de moteur ($i_{a.m}$, $i_{b.m}$, $i_{c.m}$) et des valeurs de tension de sortie de filtre ($V_{ab}$, $V_{bc}$, $Vca$), et

commander (518) l'onduleur (46) pour réguler la vitesse de rotation du moteur (20) au moins en partie en fonction de la valeur de réaction de vitesse (Spfbk) en utilisant une commande vectorielle.

**2.** Système de conversion de puissance (40) selon la revendication 1, dans lequel les valeurs de tension de sortie de filtre ($V_{ab}$, $V_{bc}$, $V_{ca}$) sont des tensions entre phases mesurées au niveau d'une sortie du filtre (30).

**3.** Système de conversion de puissance (40) selon la revendication 1, dans lequel le régulateur (100) est configuré pour mettre en œuvre une fonction de commande de courant (202) pour calculer des valeurs de commande de tension ($V^*_{abc}$) pour générer les signaux de commande de commutation d'onduleur (102), et pour calculer les valeurs de tension de sortie de filtre ($V_{ab}$, $V_{bc}$, Vca) en fonction de valeurs de commande de tension ($V^*_{abc}$).

4. Système de conversion de puissance (40) selon la revendication 3, dans lequel le régulateur (100) est configuré pour calculer les valeurs de tension de sortie de filtre ($V_{ab}$, $V_{bc}$, $V_{ca}$) en tant que tensions entre phases en fonction d'un ensemble de valeurs de commande de tension de phase ($V^*_{abc}$).

5. Système de conversion de puissance (40) selon la revendication 1,
dans lequel les condensateurs de filtre du filtre (30) sont connectés en configuration delta, et dans lequel le régulateur (100) est configuré pour calculer (503) les valeurs de réaction de courant de moteur $i_{a.m}$, $i_{b.m}$ et $i_{c.m}$ pour les phases de sortie de filtre a, b et c dans le cycle de commande de courant conformément aux équations suivantes :

$$i_{a.m} = i_u - \omega * C_f * (3)^{1/2} * V_{bc} ;$$

$$i_{b.m} = i_v - \omega * C_f * (3)^{1/2} * V_{ca} ;$$

et

$$i_{c.m} = i_u - \omega * C_f * (3)^{1/2} * V_{ab} ;$$

dans lequel $i_u$, $i_v$ et $i_w$ sont les valeurs de courant de sortie d'onduleur pour les phases de sortie d'onduleur u, v et w, $\omega$ est la fréquence angulaire de commandes de tension de sortie d'onduleur, $C_f$ est la capacité des condensateurs de filtre et $V_{ab}$, $V_{bc}$ et $V_{ca}$ sont les valeurs de tension de sortie de filtre représentant des tensions de sortie entre phases du filtre (30) ;
ou
dans lequel les condensateurs de filtre du filtre (30) sont connectés en configuration Y, et dans lequel le régulateur (100) est configuré pour calculer (503) les valeurs de réaction de courant de moteur $i_{a.m}$, $i_{b.m}$ et $i_{c.m}$ pour les phases de sortie de filtre a, b et c dans le cycle de commande de courant conformément aux équations suivantes :

$$i_{a.m} = i_u - \omega * C_f * (3)^{-1/2} * V_{bc} ;$$

$$i_{b.m} = i_v - \omega * C_f * (3)^{-1/2} * V_{ca} ;$$

et

$$i_{c.m} = i_u - \omega * C_f * (3)^{-1/2} * V_{ab} ;$$

dans lequel $i_u$, $i_v$ et $i_w$ sont les valeurs de courant de sortie d'onduleur pour les phases de sortie d'onduleur u, v et w, $\omega$ est la fréquence angulaire de commandes de tension de sortie d'onduleur, $C_f$ est la capacité des condensateurs de filtre et $V_{ab}$, $V_{bc}$ et $V_{ca}$ sont les valeurs de tension de sortie de filtre représentant des tensions de sortie entre phases du filtre (30).

6. Système de conversion de puissance (40) selon la revendication 1,
dans lequel le régulateur (100) est configuré pour calculer (508) la valeur de réaction de vitesse (Spfbk) pour le cycle de commande de courant en utilisant un observateur basé sur la f.e.m (211) en fonction des valeurs de réaction de courant de moteur ($i_{a.m}$, $i_{b.m}$, $i_{c.m}$) et des valeurs de tension de sortie de filtre (Vab, $V_{bc}$, Vca) ;
ou
dans lequel le régulateur (100) est configuré pour :

calculer (510) une valeur d'erreur de vitesse (201) en fonction d'une valeur de référence de vitesse (Spref) et de la valeur de réaction de vitesse (Spfbk) ;
calculer (512) une valeur de référence de couple (Tref) en fonction de la valeur d'erreur de vitesse (201) ;

calculer (514) une valeur de référence de courant (Id,q_ref) en fonction de la valeur de référence de couple (Tref) ;
calculer (516) une valeur de référence de sortie d'onduleur ($V_{d,q}$) en fonction de la valeur de référence de courant de moteur (Id,q_ref) et des valeurs de réaction de courant de moteur ($i_{a.m}$, $i_{b.m}$, $i_{c.m}$) ; et
fournir les signaux de commande de commutation d'onduleur (102) pour commander (518) l'onduleur (46) pour réguler la vitesse de rotation du moteur (20) en fonction de la valeur de référence de sortie d'onduleur ($V_{d,q}$).

**7.** Procédé (500) de commande de vitesse, sans capteur, d'un moteur (20) entraîné par un onduleur (46) par l'intermédiaire d'un filtre intercalé (30), le procédé (500) comprenant :

en utilisant au moins un processeur (102), calculer (503) des valeurs de réaction de courant de moteur ($i_{a.m}$, $i_{b.m}$, $i_{c.m}$) pour un cycle de commande de courant en fonction de valeurs de courant de sortie d'onduleur ($i_u$, $i_v$, $i_w$), de valeurs de capacité représentant les capacités de condensateurs de filtre ($C_f$) du filtre (30), de valeurs de tension de sortie de filtre ($V_{ab}$, $V_{bc}$, $Vca$) représentant des tensions de sortie du filtre (30) et d'une valeur de référence ou de réaction de vitesse (Spfbk) d'un cycle de commande antérieur, dans lequel les valeurs de réaction de courant de moteur ($i_{a.m}$, $i_{b.m}$, $i_{c.m}$) sont calculées en tant que différence entre les valeurs de courant de sortie d'onduleur ($i_u$, $i_v$, $i_w$) et des valeurs de courant de condensateur de filtre calculées ($i_{a.cf}$, $i_{b.cf}$, $i_{c.cf}$) ;
en utilisant l'au moins un processeur (102), calculer (508) une valeur de réaction de vitesse (Spfbk) pour le cycle de commande de courant en fonction des valeurs de réaction de courant de moteur ($i_{a.m}$, $i_{b.m}$, $i_{c.m}$) et des valeurs de tension de sortie de filtre ($V_{ab}$, $V_{bc}$, $Vca$) ; et
en utilisant l'au moins un processeur (102), commander (518) l'onduleur (46) pour réguler la vitesse de rotation du moteur (20) au moins en partie en fonction de la valeur de réaction de vitesse (Spfbk) en utilisant une commande vectorielle.

**8.** Procédé (500) selon la revendication 7, comprenant une mesure des valeurs de tension de sortie de filtre ($V_{ab}$, $V_{bc}$, $V_{ca}$) en tant que tensions entre phases au niveau d'une sortie du filtre (30).

**9.** Procédé (500) selon la revendication 7, comprenant, en utilisant l'au moins un processeur (102), mettre en œuvre une fonction de commande de courant (202) pour calculer des valeurs de commande de tension ($V^*_{abc}$) pour générer les signaux de commande de commutation d'onduleur (102), et calculer les valeurs de tension de sortie de filtre ($V_{ab}$, $V_{bc}$, $V_{ca}$) en fonction de valeurs de commande de tension ($V^*_{abc}$).

**10.** Procédé (500) selon la revendication 9, comprenant, en utilisant l'au moins un processeur (102), calculer les valeurs de tension de sortie de filtre ($V_{ab}$, $V_{bc}$, $V_{ca}$) en tant que tensions entre phases en fonction d'un ensemble de valeurs de commande de tension de phase ($V^*_{abc}$).

**11.** Procédé (500) selon la revendication 7,
dans lequel les condensateurs de filtre du filtre (30) sont connectés en configuration delta, comprenant, en utilisant l'au moins un processeur (102), calculer (503) les valeurs de réaction de courant de moteur $i_{a.m}$, $i_{b.m}$ et $i_{c.m}$ pour les phases de sortie de filtre a, b et c dans le cycle de commande de courant conformément aux équations suivantes :

$$i_{a.m} = i_u - \omega * C_f * (3)^{1/2} * V_{bc} \; ;$$

$$i_{b.m} = i_v - \omega * C_f * (3)^{1/2} * V_{ca} \; ;$$

et

$$i_{c.m} = i_u - \omega * C_f * (3)^{1/2} * V_{ab} \; ;$$

dans lequel $i_u$, $i_v$ et $i_w$ sont les valeurs de courant de sortie d'onduleur pour les phases de sortie d'onduleur u, v et w, $\omega$ est la fréquence angulaire de commandes de tension de sortie d'onduleur, $C_f$ est la capacité des condensateurs de filtre et $V_{ab}$, $V_{bc}$ et $V_{ca}$ sont les valeurs de tension de sortie de filtre représentant des tensions de sortie entre phases du filtre (30) ;
ou
dans lequel les condensateurs de filtre du filtre (30) sont connectés en configuration Y, comprenant, en utilisant l'au moins un processeur (102), calculer (503) les valeurs de réaction de courant de moteur $i_{a.m}$, $i_{b.m}$ et $i_{c.m}$ pour les phases de sortie de filtre a, b et c dans le cycle de commande de courant conformément aux équations suivantes :

$$i_{a.m} = i_u - \omega * C_f * (3)^{-1/2} * V_{bc} \; ;$$

$$i_{b.m} = i_v - \omega * C_f * (3)^{-1/2} * V_{ca} \; ;$$

et

$$i_{c.m} = i_u - \omega * C_f * (3)^{-1/2} * V_{ab} \; ;$$

dans lequel $i_u$, $i_v$ et $i_w$ sont les valeurs de courant de sortie d'onduleur pour les phases de sortie d'onduleur u, v et w, $\omega$ est la fréquence angulaire de commandes de tension de sortie d'onduleur, $C_f$ est la capacité des condensateurs de filtre et $V_{ab}$, $V_{bc}$ et $V_{ca}$ sont les valeurs de tension de sortie de filtre représentant des tensions de sortie entre phases du filtre (30).

12. Procédé (500) selon la revendication 7, comprenant, en utilisant l'au moins un processeur (102), calculer (508) la valeur de réaction de vitesse (Spfbk) pour le cycle de commande de courant en utilisant un observateur basé sur la f.e.m (211) en fonction des valeurs de réaction de courant de moteur ($i_{a.m}$, $i_{b.m}$, $i_{c.m}$) et des valeurs de tension de sortie de filtre ($V_{ab}$, $V_{bc}$, $V_{ca}$).

13. Procédé (500) selon la revendication 7, comprenant :

en utilisant l'au moins un processeur (102), calculer (510) une valeur d'erreur de vitesse (201) en fonction d'une valeur de référence de vitesse (Spref) et de la valeur de réaction de vitesse (Spfbk) ;
en utilisant l'au moins un processeur (102), calculer (512) une valeur de référence de couple (Tref) en fonction de la valeur d'erreur de vitesse (201) ;
en utilisant l'au moins un processeur (102), calculer (514) une valeur de référence de courant (Id,q_ref) en fonction de la valeur de référence de couple (Tref) ;
en utilisant l'au moins un processeur (102), calculer (516) une valeur de référence de sortie d'onduleur ($V_{d,q}$) en fonction de la valeur de référence de courant de moteur (Id,q_ref) et des valeurs de réaction de courant de moteur ($i_{a.m}$, $i_{b.m}$, $i_{c.m}$); et
en utilisant l'au moins un processeur (102), fournir les signaux de commande de commutation d'onduleur (102) pour commander (518) l'onduleur (46) pour réguler la vitesse de rotation du moteur (20) en fonction de la valeur de référence de sortie d'onduleur ($V_{d,q}$).

14. Support lisible par ordinateur, non transitoire, (104), comprenant des instructions lisibles par ordinateur qui, lorsqu'elles sont exécutées par au moins un processeur (102), font que l'au moins un processeur (102) :

calcule (503) des valeurs de réaction de courant de moteur ($i_{a.m}$, $i_{b.m}$, $i_{c.m}$) pour un cycle de commande de courant en fonction de valeurs de courant de sortie d'onduleur ($i_u$, $i_v$, $i_w$), de valeurs de capacité représentant les capacités de condensateurs de filtre ($C_f$) du filtre (30), de valeurs de tension de sortie de filtre ($V_{ab}$, $V_{bc}$, $V_{ca}$) représentant des tensions de sortie du filtre (30) et d'une valeur de référence ou de réaction de vitesse (Spfbk) d'un cycle de commande antérieur, dans lequel les valeurs de réaction de courant de moteur ($i_{a.m}$, $i_{b.m}$, $i_{c.m}$) sont calculées en tant que différence entre les valeurs de courant de sortie d'onduleur ($i_u$, $i_v$, $i_w$) et des valeurs de courant de condensateur de filtre calculées ($i_{a.cf}$, $i_{b.cf}$, $i_{c.cf}$) ;
calcule (508) une valeur de réaction de vitesse (Spfbk) pour le cycle de commande de courant en fonction des valeurs de réaction de courant de moteur ($i_{a.m}$, $i_{b.m}$, $i_{c.m}$) et des valeurs de tension de sortie de filtre ($V_{ab}$, $V_{bc}$, $V_{ca}$); et
commande (518) l'onduleur (46) pour réguler la vitesse de rotation du moteur (20) au moins en partie en fonction de la valeur de réaction de vitesse (Spfbk) en utilisant une commande vectorielle.

15. Système de conversion de puissance, comprenant :

un onduleur comprenant une entrée DC, une sortie AC et une pluralité de dispositifs de commutation branchés entre l'entrée DC et la sortie AC et opérant en fonction de signaux de commande de commutation d'onduleur pour convertir une puissance électrique DC reçue au niveau de l'entrée DC et fournir une puissance de sortie électrique AC au niveau de la sortie AC pour entraîner un moteur par l'intermédiaire d'un filtre intercalé ; et un régulateur configuré pour :

calculer des valeurs de réaction de courant de moteur ($i_{a.m}$, $i_{b.m}$, $i_{c.m}$) pour un cycle de commande de courant en fonction de valeurs de courant de sortie d'onduleur ($i_u$, $i_v$, $i_w$) et de valeurs de courant de condensateur de filtre mesurées ($i_{a.cf}$, $i_{b.cf}$, $i_{c.cf}$), dans lequel les valeurs de réaction de courant de moteur ($i_{a.m}$, $i_{b.m}$, $i_{c.m}$) sont calculées en tant que différence entre les valeurs de courant de sortie d'onduleur ($i_u$, $i_v$, $i_w$) et les valeurs de courant de condensateur de filtre mesurées ($i_{a.cf}$, $i_{b.cf}$, $i_{c.cf}$),
calculer une valeur de réaction de vitesse (Spfbk) pour le cycle de commande de courant en fonction des valeurs de réaction de courant de moteur ($i_{a.m}$, $i_{b.m}$, $i_{c.m}$) et des valeurs de tension de sortie de filtre ($V_{ab}$, $V_{bc}$, $V_{ca}$), et
commander l'onduleur pour réguler la vitesse de rotation du moteur au moins en partie en fonction de la valeur de réaction de vitesse (Spfbk) en utilisant une commande vectorielle.

**FIG. 1**

**FIG. 2**

**FIG. 3**

FIG. 4

500

502 — RECEIVE INVERTER OUTPUT CURRENT FEEDBACK

504 — COMPUTE FILTER CAPACITOR CURRENTS ACCORDING TO FILTER CAPACITOR VALUES, COMPUTED OR MEASURED FILTER OUTPUT VOLTAGES, AND SPEED FEEDBACK OR REFERENCE VALUE FROM PREVIOUS CONTROL CYCLE

503

506 — COMPUTE INVERTER-REFERRED MOTOR CURRENT FEEDBACK ACCORDING TO INVERTER OUTPUT CURRENT FEEDBACK AND FILTER CAPACITOR CURRENTS

508 — COMPUTE SPEED FEEDBACK ACCORDING TO MOTOR CURRENT FEEDBACK AND INVERTER VOLTAGES

510 — COMPUTE SPEED ERROR ACCORDING TO SPEED REFERENCE AND SPEED FEEDBACK

512 — COMPUTE TORQUE REFERENCE ACCORDING TO SPEED ERROR

514 — COMPUTE INVERTER-REFERRED MOTOR CURRENT REFERENCE ACCORDING TO TORQUE REFERENCE

516 — COMPUTE INVERTER OUTPUT VOLTAGE REFERENCE ACCORDING TO INVERTER-REFERRED MOTOR CURRENT REFERENCE AND FEEDBACK

518 — CONTROL INVERTER VOLTAGE AND/OR CURRENT ACCORDING TO INVERTER OUTPUT VOLTAGE REFERENCE

# FIG. 5

FIG. 6

700

$V_{ab}$   $V_{bc}$   $V_{ca}$

$t$

$\varphi_{bc}$

$\varphi_{ca}$

**FIG. 7**

120 —

Spref or Spfbk

| Speed to Electrical Frequency | $\omega$ | $\sqrt{3} \cdot C_{f-\triangle}$ |

$V_{ab}$

$V_{bc}$

$V_{ca}$

X → $I_c \approx i_{c.cf}$ [-1]

X → $I_a \approx i_{a.cf}$ [-1]

X → $I_b \approx i_{b.cf}$ [-1]

# FIG. 8

120 —

Spref or Spfbk

| Speed to Electrical Frequency | $\omega$ | $\dfrac{C_{f-Y}}{\sqrt{3}}$ |

$V_{ab}$

$V_{bc}$

$V_{ca}$

X → [-1] $I_c \approx i_{c.cf}$

X → [-1] $I_a \approx i_{a.cf}$

X → [-1] $I_b \approx i_{b.cf}$

# FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015123579 A1
- US 2014265952 A1
- US 2009153083 A1